# EUROPEAN PATENT SPECIFICATION

(11) **EP 2 947 914 B1**
(45) Date of publication and mention of the grant of the patent: **28.11.2018**
(21) Application number: 13874803.3
(22) Date of filing: 07.02.2013
(51) Int. Cl.: H04W 4/70, H04W 24/10

(54) **COMMUNICATION METHOD, COMMUNICATION APPARATUS AND COMMUNICATION DEVICE**
KOMMUNIKATIONSVERFAHREN, KOMMUNIKATIONSMASCHINE UND KOMMUNIKATIONSVORRICHTUNG
PROCÉDÉ DE COMMUNICATION, APPAREIL DE COMMUNICATION ET DISPOSITIF DE COMMUNICATION

(43) Date of publication of application: 25.11.2015
(73) Proprietor: Huawei Technologies Co., Ltd., Longgang District Shenzhen, Guangdong 518129 (CN)
(72) Inventor: WANG, Ke, Shenzhen Guangdong 518129 (CN); LI, Zhongfeng, Shenzhen Guangdong 518129 (CN)
(74) Representative: Pfenning, Meinig & Partner mbB
(86) International application number: PCT/CN2013/071526
(87) International publication number: WO 2014/121493

(56) References cited:
- WO-A1-2012/101394
- CN-A- 102 076 028
- CN-A- 102 413 521
- CN-A- 102 695 199
- US-A1- 2012 003 943
- US-A1- 2012 309 419
- US-A1- 2012 327 895
- 3GPP 3GPP TS 22.368, V12.1.0 31 December 2012, XP050691070

## Description

### TECHNICAL FIELD

The present invention relates to the communications field, and in particular, to a communication method, a communications apparatus, and a communications device.

### BACKGROUND

The Internet of things, also referred to as machine type communication (MTC, Machine Type Communication) or machine-to-machine communication (M2M, Machine-To-Machine), refers to connecting objects to the Internet by using an information sensing device, to implement intelligent identification and management, and this means that a large quantity of small devices can access in a wireless manner, for example a cellular network, to implement machine type communication.

With development of Internet of things technologies, the quantity of devices in the Internet of things will become extremely large, and these devices are closely integrated with wireless communications technologies, and obtain data by using a wireless connection or report data to a control center by using a wireless connection. Therefore, a large amount of randomly or periodically reported data may be generated, and these data may be from various specific applications, such as a wireless water meter or electricity meter, a vending machine, a pos machine, and the like. These applications have a huge quantity of users, but a data volume in a single transmission is relatively small (where data at an application layer is generally dozens of bytes to hundreds of bytes), and is even smaller than an overhead of an IP packet header.

Therefore, the machine type communication generally uses an independent narrowband resource, or some narrowband resources of traditional cells (or in other words, the traditional cells are system cells used by communications systems such as a cellular network), to form a so-called MTC cell (or in other words, an MTC carrier), and uses the MTC cell to implement communication.

Measurement is a basis for communication of a piece of user equipment in an MTC cell, and a base station controls communication of a user according to measurement reporting of the user, including handover, carrier configuration/reconfiguration of multiple carriers, and data transmission. Because configurations and features of the MTC cell are different from those of a traditional cell, to support communication of the user equipment in the MTC cell, it is necessary to provide a communication method, a communications apparatus, and a communications device, so as to improve a measurement effect of the MTC cell.
US 2012/327895A discloses that a network node in a cell of the cellular communication system also supports a second type of communication device (e.g., an Machine-type-Communication MTC device) that is capable of receiving a signal no larger than a second bandwidth, wherein the second bandwidth is smaller than the first bandwidth.
US 2012/003943A discloses measurement configuration reporting may be reconfigured based on events associated with the one or more serving cells and/or one or more serving component carriers, among others.

### SUMMARY

An embodiment of the present invention provides a machine type communication method, as defined in the present independent claims, which can improve a measurement effect of an MTC cell.

According to a first aspect, a machine type communication method is provided, where the method includes: sending, by a base station device, at least one piece of measurement indication information to a piece of user equipment, where the measurement indication information includes first carrier information used for indicating a target carrier, at least one machine type communication MTC cell is configured on the target carrier, and the measurement indication information further includes at least one of the following information: first measurement bandwidth indication information, at least one piece of reference symbol indication information, and at least one piece of subframe indication information; and receiving, by the base station device, first measurement report information that is sent by the user equipment after the user equipment performs measurement according to the measurement indication information, and communicating with the user equipment according to the first measurement report information, where the first measurement bandwidth indication information is used for indicating a first measurement bandwidth, the first measurement bandwidth is used for measurement of the at least one MTC cell, the first measurement bandwidth is different from a second measurement bandwidth, and the second measurement bandwidth is used for measurement of a first non-MTC cell configured on the target carrier; the reference symbol indication information is used for indicating a configuration of a reference symbol of a corresponding MTC cell, and the reference symbol of the MTC cell is used for measurement of the MTC cell; and the subframe indication information is used for indicating a' subframe used by a corresponding MTC cell.

With reference to the first aspect, in a first implementation manner of the first aspect, the measurement indication information includes the reference symbol indication information, a time-frequency resource of the MTC cell is configured based on a time-frequency resource of a second non-MTC cell, and the reference symbol of the MTC cell is configured based on a reference symbol of the second non-MTC cell, where the reference symbol of the second non-MTC cell is used for measurement of the second non-MTC cell, and the reference symbol indication information is specifically used for indicating a position at which the time-frequency resource of the MTC cell is located in the time-frequency resource of the second non-MTC cell, or the reference symbol indication information is specifically used for indicating a position at which the reference symbol of the MTC cell is located in the reference symbol of the second non-MTC cell.

With reference to the first aspect and the foregoing implementation manner of the first aspect, in a second implementation manner of the first aspect, the reference symbol indication information includes first bandwidth information, a cell identifier of the second non-MTC cell, second carrier information and/or offset information, where the first bandwidth information is used for indicating a bandwidth of the second non-MTC cell, the second carrier information is used for indicating a carrier of the second non-MTC cell, and the offset information is used for indicating an offset of the target carrier relative to the carrier of the second non-MTC cell.

With reference to the first aspect and the foregoing implementation manner of the first aspect, in a third implementation manner of the first aspect, the reference symbol indication information further includes second bandwidth information, and the second bandwidth information is used for indicating a bandwidth of the MTC cell.

With reference to the first aspect and the foregoing implementation manner of the first aspect, in a fourth implementation manner of the first aspect, the measurement indication information includes the reference symbol indication information, and the reference symbol indication information includes basic sequence information and port information, where the basic sequence information is used for indicating a basic sequence for generating the reference symbol of the MTC cell, and the port information is used for indicating a port of the reference symbol of the MTC cell.

With reference to the first aspect and the foregoing implementation manner of the first aspect, in a fifth implementation manner of the first aspect, the reference symbol indication information further includes second bandwidth information, and the second bandwidth information is used for indicating a bandwidth of the MTC cell.

With reference to the first aspect and the foregoing implementation manner of the first aspect, in a sixth implementation manner of the first aspect, the reference symbol indication information further includes a cell identifier of the MTC cell.

With reference to the first aspect and the foregoing implementation manner of the first aspect, in a seventh implementation manner of the first aspect, the measurement indication information includes the at least one piece of subframe indication information, and the at least one piece of subframe indication information is one-to-one corresponding to the at least one MTC cell.

With reference to the first aspect and the foregoing implementation manner of the first aspect, in an eighth implementation manner of the first aspect, the measurement indication information includes one piece of subframe indication information, at least two MTC cells are configured on the target carrier, and the at least two MTC cells use a same subframe.

With reference to the first aspect and the foregoing implementation manner of the first aspect, in a ninth implementation manner of the first aspect, the sending the measurement indication information to the user equipment includes:
sending the measurement indication information to the user equipment by using a radio resource control connection reconfiguration message.

With reference to the first aspect and the foregoing implementation manner of the first aspect, in a tenth implementation manner of the first aspect, the sending the measurement indication information to the user equipment by using a radio resource control connection reconfiguration message includes:
sending the measurement indication information to the user equipment by using the radio resource control connection reconfiguration message, where the measurement indication information is carried by a measurement object information element or a radio resource configuration information element in the radio resource control connection reconfiguration message.

With reference to the first aspect and the foregoing implementation manner of the first aspect, in an eleventh implementation manner of the first aspect, before the sending, by a base station device, at least one piece of measurement indication information to a piece of user equipment, the method further includes:
determining, by the base station device, that the user equipment is capable of performing machine type communication.

With reference to the first aspect and the foregoing implementation manner of the first aspect, in a twelfth implementation manner of the first aspect, before the sending, by a base station device, at least one piece of measurement indication information to a piece of user equipment, the method further includes: determining, by the base station device, a communication capability of the user equipment; determining, by the base station device according to the communication capability of the user equipment, a neighboring cell that the user equipment is capable of measuring; and determining, by the base station device, the at least one piece of measurement indication information according to a carrier of the neighboring cell.

With reference to the first aspect and the foregoing implementation manner of the first aspect, in a thirteenth implementation manner of the first aspect, the measurement indication information includes the first measurement bandwidth indication information, and the method further includes: determining, by the base station device, that the user equipment is capable of performing non-machine type communication; sending, by the base station device to the user equipment, second measurement bandwidth indication information used for indicating the second measurement bandwidth; and receiving, by the base station device, second measurement report information that is sent by the user equipment after the user equipment performs measurement according to the second measurement bandwidth indication information, and communicating with the user equipment according to the second measurement report information.

According to a second aspect, a communication method is provided, where the method includes: acquiring, by a piece of user equipment, at least one piece of measurement indication information sent by a base station device, where the measurement indication information includes first carrier information used for indicating a target carrier, at least one machine type communication MTC cell is configured on the target carrier, and the measurement indication information further includes at least one of the following information: first measurement bandwidth indication information, at least one piece of reference symbol indication information, and at least one piece of subframe indication information; and performing, by the user equipment, measurement according to the measurement indication information, and sending first measurement report information to the base station device according to a result of the measurement, where the first measurement bandwidth indication information is used for indicating a first measurement bandwidth, the first measurement bandwidth is used for measurement of the at least one MTC cell, the first measurement bandwidth is different from a second measurement bandwidth, and the second measurement bandwidth is used for measurement of a first non-MTC cell configured on the target carrier; the reference symbol indication information is used for indicating a configuration of a reference symbol of a corresponding MTC cell, and the reference symbol of the MTC cell is used for measurement of the MTC cell; and the subframe indication information is used for indicating a subframe used by a corresponding MTC cell.

With reference to the second aspect, in a first implementation manner of the second aspect, the measurement indication information includes the reference symbol indication information, a time-frequency resource of the MTC cell is configured based on a time-frequency resource of a second non-MTC cell, and the reference symbol of the MTC cell is configured based on a reference symbol of the second non-MTC cell, where the reference symbol of the second non-MTC cell is used for measurement of the second non-MTC cell, and the reference symbol indication information is specifically used for indicating a position at which the time-frequency resource of the MTC cell is located in the time-frequency resource of the second non-MTC cell, or the reference symbol indication information is specifically used for indicating a position at which the reference symbol of the MTC cell is located in the reference symbol of the second non-MTC cell.

With reference to the second aspect and the foregoing implementation manner of the second aspect, in a second implementation manner of the second aspect, the reference symbol indication information includes first bandwidth information, a cell identifier of the second non-MTC cell, second carrier information and/or offset information, where the first bandwidth information is used for indicating a bandwidth of the second non-MTC cell, and the second carrier information is used for indicating a carrier of the second non-MTC cell, the offset information is used for indicating an offset of the target carrier relative to the carrier of the second non-MTC cell, and the performing, by the user equipment, measurement according to the measurement indication information specifically includes: determining, by the user equipment, a bandwidth of the MTC cell according to system information; determining, by the user equipment, the reference symbol of the MTC cell according to the reference symbol indication information and the bandwidth of the MTC cell; and measuring, by the user equipment, the MTC cell according to the reference symbol of the MTC cell.

With reference to the second aspect and the foregoing implementation manner of the second aspect, in a third implementation manner of the second aspect, the reference symbol indication information includes second bandwidth information, first bandwidth information, a cell identifier of the second non-MTC cell, second carrier information and/or offset information, where the second bandwidth information is used for indicating a bandwidth of the MTC cell, the first bandwidth information is used for indicating a bandwidth of the second non-MTC cell, the second carrier information is used for indicating a carrier of the second non-MTC cell, the offset information is used for indicating an offset of the target carrier relative to the carrier of the second non-MTC cell, and the performing, by the user equipment, measurement according to the measurement indication information specifically includes: determining, by the user equipment, the reference symbol of the MTC cell according to the reference symbol indication information; and measuring, by the user equipment, the MTC cell according to the reference symbol of the MTC cell.

With reference to the second aspect and the foregoing implementation manner of the second aspect, in a fourth implementation manner of the second aspect, the measurement indication information includes the reference symbol indication information, and the reference symbol indication information includes basic sequence information and port information, where the basic sequence information is used for indicating a basic sequence for generating the reference symbol of the MTC cell, the port information is used for indicating a port of the reference symbol of the MTC cell, and the performing, by the user equipment, measurement according to the measurement indication information specifically includes: determining, by the user equipment, a bandwidth of the MTC cell according to system information; determining, by the user equipment, a cell identifier of the MTC cell according to the system information or synchronization information; determining, by the user equipment, the reference symbol of the MTC cell according to the reference symbol indication information, the bandwidth of the MTC cell, and the cell identifier of the MTC cell; and measuring, by the user equipment, the MTC cell according to the reference symbol of the MTC cell.

With reference to the second aspect and the foregoing implementation manner of the second aspect, in a fifth implementation manner of the second aspect, the measurement indication information includes the reference symbol indication information, and the reference symbol indication information includes second bandwidth information, basic sequence information and port information, where the basic sequence information is used for indicating a basic sequence for generating the reference symbol of the MTC cell, the port information is used for indicating a port of the reference symbol of the MTC cell, the second bandwidth information is used for indicating a bandwidth of the MTC cell, and the performing, by the user equipment, measurement according to the measurement indication information specifically includes: determining, by the user equipment, a cell identifier of the MTC cell according to the system information or synchronization information; determining, by the user equipment, the reference symbol of the MTC cell according to the reference symbol indication information and the cell identifier of the MTC cell; and measuring, by the user equipment, the MTC cell according to the reference symbol of the MTC cell.

With reference to the second aspect and the foregoing implementation manner of the second aspect, in a sixth implementation manner of the second aspect, the measurement indication information includes the reference symbol indication information, and the reference symbol indication information includes a cell identifier of the MTC cell, basic sequence information and port information, where the basic sequence information is used for indicating a basic sequence for generating the reference symbol of the MTC cell, the port information is used for indicating a port of the reference symbol of the MTC cell, and the performing, by the user equipment, measurement according to the measurement indication information specifically includes: determining, by the user equipment, a bandwidth of the MTC cell according to system information; determining, by the user equipment, the reference symbol of the MTC cell according to the reference symbol indication information and the bandwidth of the MTC cell; and measuring, by the user equipment, the MTC cell according to the reference symbol of the MTC cell.

With reference to the second aspect and the foregoing implementation manner of the second aspect, in a seventh implementation manner of the second aspect, the measurement indication information includes the reference symbol indication information, and the reference symbol indication information includes a cell identifier of the MTC cell, second bandwidth information, basic sequence information and port information, where the basic sequence information is used for indicating a basic sequence for generating the reference symbol of the MTC cell, the port information is used for indicating a port of the reference symbol of the MTC cell, the second bandwidth information is used for indicating a bandwidth of the MTC cell, and the performing, by the user equipment, measurement according to the measurement indication information specifically includes: determining, by the user equipment, the reference symbol of the MTC cell according to the reference symbol indication information; and measuring, by the user equipment, the MTC cell according to the reference symbol of the MTC cell.

With reference to the second aspect and the foregoing implementation manner of the second aspect, in an eighth implementation manner of the second aspect, the measurement indication information includes the at least one piece of subframe indication information, and the at least one piece of subframe indication information is one-to-one corresponding to the at least one MTC cell.

With reference to the second aspect and the foregoing implementation manner of the second aspect, in a ninth implementation manner of the second aspect, the measurement indication information includes one piece of subframe indication information, at least two MTC cells are configured on the target carrier, and the at least two MTC cells use a same subframe.

With reference to the second aspect and the foregoing implementation manner of the second aspect, in a tenth implementation manner of the second aspect, the acquiring, by a piece of user equipment, at least one piece of measurement indication information sent by a base station device includes: receiving, by the user equipment, a radio resource control connection reconfiguration message that is sent by the base station device and includes the at least one piece of measurement indication information; and obtaining, by the user equipment, the measurement indication information from the radio resource control connection reconfiguration message.

With reference to the second aspect and the foregoing implementation manner of the second aspect, in an eleventh implementation manner of the second aspect, the measurement indication information is carried by a measurement object information element or an MTC cell configuration information element in the radio resource control connection reconfiguration message, and the acquiring, by the user equipment, the measurement indication information from the radio resource control connection reconfiguration message includes: acquiring, by the user equipment, the measurement indication information from the measurement object information element or the MTC cell configuration information element.

With reference to the second aspect and the foregoing implementation manner of the second aspect, in a twelfth implementation manner of the second aspect, the user equipment is capable of performing machine type communication.

With reference to the second aspect and the foregoing implementation manner of the second aspect, in a thirteenth implementation manner of the second aspect, the measurement indication information includes the first measurement bandwidth indication information, the user equipment is capable of performing non-machine type communication, and the method further includes: acquiring, by the user equipment, second measurement bandwidth indication information that is sent by the base station device and used for indicating the second measurement bandwidth; and performing, by the user equipment, measurement according to the second measurement bandwidth indication information, and sending second measurement report information to the base station device according to a result of the measurement.

According to a third aspect, a communications apparatus is provided, where the apparatus includes:
a sending unit, configured to execute the sending step according to the first aspect or any one of the foregoing implementation manner of the first aspect;
a receiving unit, configured to execute the receiving step according to the first aspect or any one of the foregoing implementation manner of the first aspect; and
a processing unit, configured to execute the communicating or determining step according to the first aspect or any one of the foregoing implementation manner of the first aspect.

According to a fourth aspect, a communications apparatus is provided, where the apparatus includes:
an acquiring unit, configured to execute the acquiring step according to the second aspect or any one of the foregoing implementation manner of the second aspect;
a processing unit, configured to execute the measuring step according to the second aspect or any one of the foregoing implementation manner of the second aspect; and
a sending unit, configured to execute the sending step according to the second aspect or any one of the foregoing implementation manner of the second aspect.

In the communication method, the communications apparatus, and the communications device according to the embodiments of the present invention, a base station device sets different measurement bandwidths for an MTC cell and a non-MTC cell, so that a measurement effect of the MTC cell can be improved without affecting a measurement effect of the non-MTC cell. The base station device instructs, according to the MTC cell, a piece of user equipment to measure the MTC cell according to a reference symbol on a side corresponding to the MTC cell, so that the measurement effect of the MTC cell can be improved. The base station device instructs, according to the MTC cell, the user equipment to listen on and measure only a subframe that includes the MTC cell, so that the accuracy of the measurement on the MTC cell can be improved, thereby improving the measurement effect of the MTC cell.

### BRIEF DESCRIPTION OF DRAWINGS

To describe the technical solutions in the embodiments of the present invention more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a schematic flowchart of a communication method according to an embodiment of the present invention;
FIG. 2 is a schematic flowchart of a communication method according to another embodiment of the present invention;
FIG. 3 is a schematic block diagram of a communications apparatus according to an embodiment of the present invention;
FIG. 4 is a schematic block diagram of a communications apparatus according to another embodiment of the present invention;
FIG. 5 is a schematic structural diagram of a communications device according to an embodiment of the present invention; and
FIG. 6 is a schematic structural diagram of a communications device according to another embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

Specifically, a communication method 100 according to an embodiment of the present invention is applicable to various systems capable of performing machine type communication (or in other words, serving a device capable of performing machine type communication), for example: Global System for Mobile Communications (GSM, Global System of Mobile communication), a Code Division Multiple Access (CDMA, Code Division Multiple Access) system, Wideband Code Division Multiple Access Wireless (WCDMA, Wideband Code Division Multiple Access Wireless) system, general packet radio service (GPRS, General Packet Radio Service) system, Long Term Evolution (LTE, Long Term Evolution) system, and machine type communication (MTC, Machine Type Communications) system. For ease of understanding, an implementation process and method when communication in this embodiment of the present invention is applied to an LTE system are used as an example in the following for description.

A piece of user equipment (UE, User Equipment), also referred to as a mobile terminal (Mobile Terminal), a mobile user equipment, and the like, may communicate with one or more core networks by using a radio access network (for example, RAN, Radio Access Network). The user equipment may be a mobile terminal, such as a mobile phone (also referred to as a "cellular" phone) and a computer with a mobile terminal. For example, the user equipment may be a portable, pocket-sized, handheld, computer built-in, or in-vehicle mobile apparatus, which exchanges language and/or data with the radio access network. In addition, it should be noted that, in the embodiments of the present invention, the user equipment is capable of performing machine type communication.

A base station may be a base station (BTS, Base Transceiver Station) in the GSM or CDMA, or may be a base station (NodeB) in the WCDMA, or may be an evolved NodeB (eNB or e-NodeB, evolutional Node B) in the LTE. In addition, a base station may be a micro base station (Micro), or may be a pico base station (Pico), or may be a home base station, or may be referred to as a femto base station (femto) or an access point (AP, Access Point), which is not limited in the present invention. It is not limited in the present invention. For ease of understanding, an eNB is used as an example below to describe actions of the base station device. It should be noted that, in the embodiments of the present invention, the base station device may control the user equipment to perform actions such as accessing, handover, or reselection among multiple cells, and moreover, this process is the same as that in the prior art.

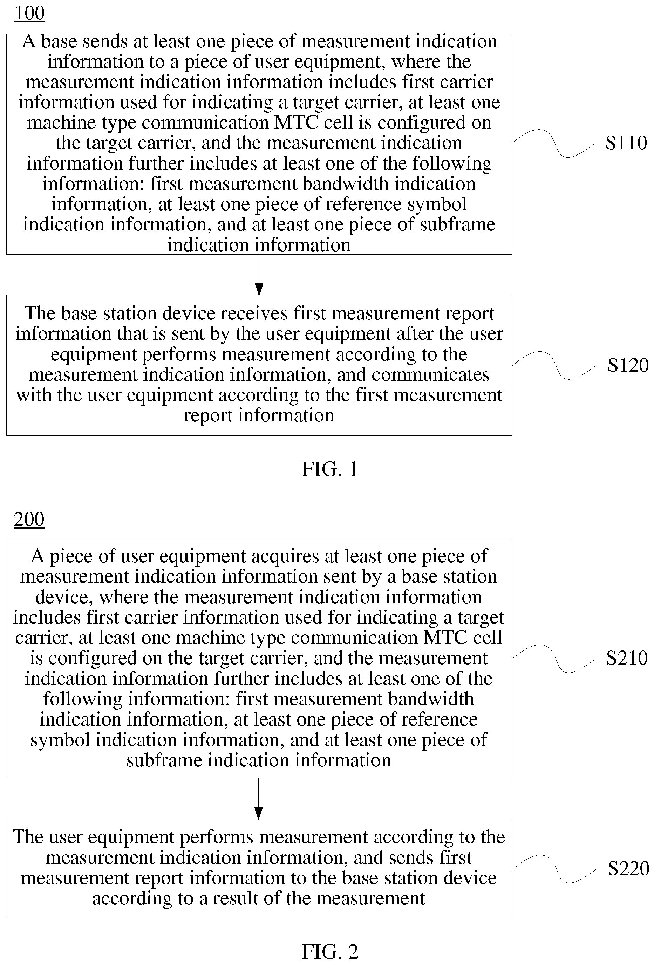

FIG. 1 shows, from the perspective of a base station device, a schematic flowchart of a communication method 100 according to an embodiment of the present invention. As shown in FIG. 1, the method 100 includes:
S110: The base station device sends at least one piece of measurement indication information to a piece of user equipment, where the measurement indication information includes first carrier information used for indicating a target carrier, at least one machine type communication MTC cell (or referred to as an MTC carrier) is configured on the target carrier, and the measurement indication information further includes at least one of the following information: first measurement bandwidth indication information, at least one piece of reference symbol indication information, and at least one piece of subframe indication information.

S120: The base station device receives first measurement report information that is sent by the user equipment after the user equipment performs measurement according to the measurement indication information, and communicates with the user equipment according to the first measurement report information.

The first measurement bandwidth indication information is used for indicating a first measurement bandwidth, the first measurement bandwidth is used for measurement of the at least one MTC cell, the first measurement bandwidth is different from a second measurement bandwidth, and the second measurement bandwidth is used for measurement of a first non-MTC cell configured on the target carrier.

The reference symbol indication information is used for indicating a configuration of a reference symbol of a corresponding MTC cell, and the reference symbol of the MTC cell is used for measurement of the MTC cell.

The subframe indication information is used for indicating a subframe used by a corresponding MTC cell.

Specifically, for example, when a UE moves in a system, there is a situation in which communication quality of a current serving cell (or base station device) decreases, and the current serving cell (or base station device) cannot continue to serve the UE, and therefore, a process of handover or carrier configuration/reconfiguration of multiple carriers needs to be performed; the mobility of the UE (or in other words, handover and carrier configuration/reconfiguration of multiple carriers) needs to be supported by, for example, measurement using radio resource management (RRM, Radio Resource Management), that is, a network side device (specifically, a base station device currently serving the UE, which, for ease of understanding and description, is referred to as a serving base station below) controls, by means of measurement and reporting performed by the UE, handover of the UE or configuration/reconfiguration of multiple carriers. In addition, in a data transmission process, the UE also needs to measure and report, for example, quality of a channel, so that the base station can dynamically adjust a transmission format of data according to a status of the channel.

In S110, the serving base station may send, to the UE, measurement indication information used for an MTC cell (which may include the current serving cell and one or more of neighboring cells of the UE).

Optionally, before the base station device sends the at least one piece of measurement indication information to the user equipment, the method further includes:
determining, by the base station device, that the user equipment is capable of performing machine type communication.

Specifically, the measurement indication information is used for measuring the MTC cell, and therefore, for example, when the communication method 100 of this embodiment of the present invention is applied to an LTE system, the serving base station may further determine whether the UE is capable of performing machine type communication, and configure the measurement indication information for the UE when determining that the UE is capable of performing machine type communication. The following methods may be listed as the method for determining, by the serving base station, whether the UE is capable of performing machine type communication:
a. When the UE accesses the network or hands over, the UE may notify, by using signaling, the serving base station of whether the UE is capable of performing machine type communication.
b. An upper-layer network side device of the serving base station, such as a mobility management entity (MME, Mobility Management Entity), may learn from, for example, an operator to which the UE subscribes, whether the UE is capable of performing machine type communication, so that the serving base station may learn from the MME whether the UE is capable of performing machine type communication.
c. In a case in which the UE has handed over from a source base station to the serving base station and the UE has notified the source base station of whether the UE is capable of performing machine type communication, the serving base station may learn from the source base station whether the UE is capable of performing machine type communication.

It should be understood that, the methods a to c listed above are merely for exemplary description, and the present invention is not limited thereto; all other methods capable of enabling the base station device to determine whether the UE is capable of performing machine type communication fall within the protection scope of the present invention.

Before the base station device sends the at least one piece of measurement indication information to the user equipment, the method further includes:
determining, by the base station device, a communication capability of the user equipment;
determining, by the base station device according to the communication capability of the user equipment, a neighboring cell that the user equipment is capable of measuring; and
determining the at least one piece of measurement indication information according to a carrier of the neighboring cell.

Specifically, in a case in which a current serving cell has multiple neighboring cells (for example, MTC neighboring cells), the serving base station may configure multiple pieces of corresponding measurement indication information for the multiple neighboring cells (specifically, for carriers of the multiple neighboring cells, which are described in detail subsequently), so that the UE may measure the multiple neighboring cells according to the multiple pieces of measurement indication information. However, if the UE is limited by its communication capability and can measure only some cells among the multiple neighboring cells, the measurement indication information configured by the serving base station for other cells is useless, causing a waste of system communications resources. Therefore, in this embodiment of the present invention, the serving base station may determine the communication capability, or in other words, a measurement capability, of the UE in advance, that is, the serving base station may determine MTC cells that the UE is capable of measuring, so that the serving base station may configure and deliver, to the UE, measurement indication information of only the MTC cells that the UE is capable of measuring. Therefore, processing efficiency can be improved, and the waste of system communications resources can be reduced.

The following methods may be listed as the method for determining, by the serving base station, the communication capability of the UE:
d. When the UE accesses the network or hands over, the UE notifies, by using signaling, the serving base station of the communication capability of the UE.
e. An upper-layer network side device of the serving base station, such as a mobility management entity (MME, Mobility Management Entity), may learn from, for example, an operator to which the UE subscribes, the communication capability of the UE, so that the serving base station may learn, from the MME, the communication capability of the UE.
f. In a case in which the UE hands over from a source base station to the serving base station and the UE has notified the source base station of the communication capability of the UE, the serving base station may learn, from the source base station, the communication capability of the UE.

It should be understood that, the methods d to f listed above are merely for exemplary description, and the present invention is not limited thereto; all other methods capable of enabling the base station device to determine whether the communication capability of the UE fall within the protection scope of the present invention.

In addition, when the serving base station needs to deliver, to the UE, multiple pieces of measurement indication information for multiple MTC cells, the multiple pieces of measurement indication information may correspond to carriers of the MTC cells. That is, the measurement indication information may include information (the first carrier information) about a cell (the target carrier) that can be measured by using the measurement indication information.

For example, when multiple MTC cells are configured on a same carrier (for example, bandwidths of the MTC cells are different), because the bandwidths of the MTC cells are all relatively small, for example, the bandwidths may be smaller than or equal to 1.4 MHz, a same measurement bandwidth that is relatively small may be used to measure the multiple MTC cells, for example, the measurement bandwidth may be smaller than or equal to 1.4 MHz; a function of the measurement bandwidth is described in detail subsequently. That is, in a case in which a carrier has multiple MTC cells (where the multiple MTC cells have a same center frequency but different bandwidths) thereon, the multiple MTC cells may share the first measurement bandwidth indication information in the measurement indication information.

In this way, the UE may determine, according to the first carrier information, a carrier (specifically, one or more MTC cells on the carrier) that can be measured by using the measurement indication information (specifically, the first measurement bandwidth indication information).

It should be understood that, the above-listed manner of determining the measurement indication information (one piece of measurement indication information corresponds to only one carrier) according to the carrier of the MTC cell is merely an exemplary description, and the present invention is not limited thereto. Further, one piece of measurement indication information may correspond to only one MTC cell, for example, in addition to the foregoing information (the first carrier information) for indicating the carrier of the MTC cell, information for indicating a bandwidth of the MTC cell may also be added to the measurement indication information.

In this way, the UE may determine, according to the first carrier information and the information for indicating the bandwidth of the MTC cell, the MTC cell that can be measured by using the measurement indication information.

Moreover, in this case, a measurement bandwidth corresponding to the MTC cell may further be determined according to the bandwidth of the MTC cell, that is, in a case in which one carrier has multiple MTC cells (where the multiple MTC cells have a same center frequency but different bandwidths), different measurement bandwidths are used to measure the multiple MTC cells.

In this embodiment of the present invention, when multiple MTC cells (for example, bandwidths of the MTC cells are different) are configured on a same carrier, because the bandwidths of the MTC cells are different, reference symbols used for measuring the MTC cells may also be different. In this case, a same piece of measurement indication information (which corresponds to one carrier) may include multiple pieces of reference symbol indication information, where the multiple pieces of reference symbol indication information are one-to-one corresponding to the multiple MTC cells, that is, one piece of reference symbol indication information is only used for indicating a configuration of one MTC cell. In addition, in this embodiment of the present invention, for example, the UE and the serving base station may differentiate the MTC cells according to the carrier and bandwidths.

In addition, optionally, in this embodiment of the present invention, the measurement indication information includes the at least one piece of subframe indication information, and the at least one piece of subframe indication information is one-to-one corresponding to the at least one MTC cell.

Specifically, when multiple MTC cells (for example, the MTC cells have different bandwidths) are configured on a same carrier, if the MTC cells are located in different subframes (or in other words, have different configurations on time domain resources), a same piece of measurement indication information (which corresponds to one carrier) may include multiple pieces of subframe indication information, where the multiple pieces of subframe indication information are one-to-one corresponding to the subframes in which the MTC cells are located. In addition, in this embodiment of the present invention, for example, the UE and the serving base station may differentiate the MTC cells according to the carrier and bandwidths.

Optionally, the measurement indication information includes one piece of subframe indication information, at least two MTC cells are configured on the target carrier, and the at least two MTC cells use a same subframe.

Specifically, when multiple MTC cells (for example, the MTC cells have different bandwidths) are configured on a same carrier, if the MTC cells are located in a same subframe (or in other words, have a same configuration on time domain resources), a same piece of measurement indication information (which corresponds to one carrier) may include one piece of subframe indication information.

In this embodiment of the present invention, the measurement indication information may include any combination of the following information: information (first measurement bandwidth indication information) for indicating a measurement bandwidth (first measurement bandwidth) used for measuring the MTC cell, information (reference symbol indication information) for indicating a reference symbol used for measuring the MTC cell, and information (subframe indication information) for indicating a subframe used by the MTC cell. Functions and use processes of the foregoing information are separately described below.

### 1. First measurement bandwidth indication information

Specifically, an MTC cell and a traditional cell (non-MTC cell) may have a same carrier (which may also be referred to as a center frequency), but have significantly different bandwidths, for example, the bandwidth of the traditional cell may be 20 MHz, while the bandwidth of the MTC cell is generally 1.4 MHz. At present, system cell measurement, for example, RRM measurement, is implemented in the following manner, that is, a base station configures, for a piece of user equipment, a parameter used for measurement, that is, "measurement object (Measurement Object)", so that the user equipment measures a system cell according to the measurement object. Only one unique "measurement object" is configured for one carrier, and the "measurement object" includes a parameter indicating a bandwidth for measurement, that is, "measurement bandwidth". The user equipment measures cells on the carrier according to the measurement bandwidth. However, because the MTC cell is a narrowband cell, and if measurement on the MTC cell needs to be ensured, the only way is to set the measurement bandwidth to be a narrow bandwidth. However, if the user equipment further needs to measure another cell (a traditional cell) on the carrier, the narrow measurement bandwidth affects a measurement effect of the traditional cell. Similarly, if a wide measurement bandwidth is used to ensure the measurement effect of the traditional cell, a measurement effect of the MTC cell is affected.

In contrast, in this embodiment of the present invention, when both an MTC cell and a non-MTC cell are configured on a carrier, the serving base station may configure different measurement objects for the MTC cell and the non-MTC cell. Specifically, the measurement objects are measurement bandwidths, where a configuration method and a value of the measurement bandwidth (second measurement bandwidth) used for measuring the non-MTC cell may be the same as those in the prior art, and descriptions thereof are omitted herein to avoid repetition. Moreover, the serving base station may set, according to the bandwidth of the MTC cell, a measurement bandwidth (first measurement bandwidth) for measuring the MTC cell, for example, because the bandwidth of the MTC cell is generally 1.4 MHz, the serving base station may set the first measurement bandwidth to 1.4 MHz, that is, the first measurement bandwidth is the same as the bandwidth of the MTC cell, or the serving base station may also set the value of the first measurement bandwidth to be smaller than the bandwidth of the MTC cell, which is not particularly limited in the present invention.

After acquiring the measurement bandwidth (first measurement bandwidth) of each MTC cell, the UE may measure each MTC cell according to the measurement bandwidth. In addition, in this embodiment of the present invention, a method and a process of measuring, by the UE, the MTC cell according to the measurement bandwidth are similar to those in the prior art, and descriptions thereof are omitted herein to avoid repetition.

The measurement indication information includes the first measurement bandwidth indication information, and
the method further includes:
determining, by the base station device, that the user equipment is capable of performing non-machine type communication;
sending, by the base station device to the user equipment, second measurement bandwidth indication information used for indicating the second measurement bandwidth; and
receiving, by the base station device, second measurement report information that is sent by the user equipment after the user equipment performs measurement according to the second measurement bandwidth indication information, and communicating with the user equipment according to the second measurement report information.

Specifically, if the UE is only capable of performing machine type communication but is incapable of performing non-machine type communication (specifically, performing communication by using a traditional cell), or the UE is only capable of measuring an MTC cell but is incapable of measuring a non-MTC cell, the serving base station may deliver only the first measurement bandwidth indication information to the UE, so that the UE may measure, according to the first measurement bandwidth, only the MTC cell configured on the carrier, but does not measure the non-MTC cell configured on the carrier.

If the UE is not only capable of performing machine type communication but also capable of performing non-machine type communication (specifically, performing communication by using a traditional cell), or the UE is not only capable of measuring an MTC cell but also capable of measuring a non-MTC cell, the serving base station may deliver the first measurement bandwidth indication information and the second measurement bandwidth indication information to the UE, so that the UE may measure, according to the first measurement bandwidth, the MTC cell configured on the carrier, and measure, according to the second measurement bandwidth, the non-MTC cell configured on the carrier.

According to the communication method of this embodiment of the present invention, by configuring different measurement bandwidths for an MTC cell and a non-MTC cell on a same carrier, measurement effects of the MTC cell and the non-MTC cell can be improved.

### 2. Reference symbol indication information

In the prior art, an MTC cell may be configured according to a part of a resource (specifically, time-frequency resource) of a traditional cell, that is, although the MTC cell has a narrow bandwidth, a reference symbol used for measuring the MTC cell is still a reference symbol (wide-bandwidth reference symbol) of the traditional cell (wide-bandwidth cell), and therefore, a measurement effect may be affected.

In contrast, in this embodiment of the present invention, the serving base station may notify the UE of a reference symbol (referred to as a reference symbol A below for ease of differentiation) specially for measurement of an MTC cell; herein, "specially for measurement of an MTC cell" refers to that a reference symbol (referred to as a reference symbol B below for ease of differentiation) of a traditional cell is no longer used as the reference symbol A used for measuring the MTC cell; instead, the reference symbol used for measuring the MTC cell corresponds to the MTC cell, and specifically, corresponds to a bandwidth of the MTC cell.

Optionally, in this embodiment of the present invention, the measurement indication information includes the reference symbol indication information, a time-frequency resource of the MTC cell is configured based on a time-frequency resource of a second non-MTC cell, and the reference symbol of the MTC cell is configured based on a reference symbol of the second non-MTC cell, where the reference symbol of the second non-MTC cell is used for measurement of the second non-MTC cell; and
the reference symbol indication information is specifically used for indicating a position at which the time-frequency resource of the MTC cell is located in the time-frequency resource of the second non-MTC cell, or
the reference symbol indication information is specifically used for indicating a position at which the reference symbol of the MTC cell is located in the reference symbol of the second non-MTC cell.

Specifically, in this embodiment of the present invention, in a case in which the time-frequency resource of the MTC cell is configured according to the time-frequency resource of the traditional cell (second non-MTC cell), and specifically, a part of the time-frequency resource of the traditional cell is selected to serve as the time-frequency resource of the MTC cell, a part of the reference symbol may be selected from the reference symbol B according to the configuration of the MTC cell, to serve as the reference symbol A for measuring the MTC cell. Herein, it should be noted that, the carrier of the MTC cell may be the same as or different from the carrier of the second non-MTC cell, which is not particularly limited in the present invention. In addition, when the carrier of the MTC cell is the same as the carrier of the second non-MTC cell, the second non-MTC cell and the foregoing first non-MTC cell may be the same (having a same bandwidth) or different (having different bandwidths), which is not particularly limited in the present invention.

In this embodiment of the present invention, the serving base station may notify, by using the reference symbol indication information, the UE of the position at which the reference symbol A is located in the reference symbol B, so that the UE can acquire the reference symbol B, and determine the reference symbol B according to the reference symbol indication information. In this embodiment of the present invention, a method of acquiring, by the UE, the reference symbol B is the same as that in the prior art, and the description thereof is omitted herein to avoid repetition.

Alternatively, in this embodiment of the present invention, the position at which the time-frequency resource of the MTC cell is located in the time-frequency resource of the traditional cell is corresponding to the position of the reference symbol A in the reference symbol B, for example, if the time-frequency resource of the MTC cell is located at a central position in the time-frequency resource of the second non-MTC cell, the reference symbol A is also at a central position in the reference symbol B. In this way, the serving base station may notify, by using the reference symbol indication information, the UE of the position at which the time-frequency resource of the MTC cell is located in the time-frequency resource of the second non-MTC cell, so that the UE may acquire the reference symbol B, and determine, according to the position at which the time-frequency resource of the MTC cell is located in the time-frequency resource of the second non-MTC cell, the position of the reference symbol A in the reference symbol B, thereby determining the reference symbol B.

Optionally, in this embodiment of the present invention, the reference symbol indication information includes first bandwidth information, a cell identifier of the second non-MTC cell, second carrier information and/or offset information, where the first bandwidth information is used for indicating a bandwidth of the second non-MTC cell, the second carrier information is used for indicating a carrier of the second non-MTC cell, and the offset information is used for indicating an offset of the target carrier relative to the carrier of the second non-MTC cell.

For example, to obtain the position at which the time-frequency resource of the MTC cell is located in the time-frequency resource of the second non-MTC cell, the UE needs to know the bandwidth of the MTC cell, the carrier of the MTC cell, the bandwidth of the second non-MTC cell, the carrier of the second non-MTC cell, and a relationship between the position of the MTC cell in the second non-MTC cell and the position of the reference symbol A in the reference symbol B.

Specifically, in this embodiment of the present invention, the UE may determine the bandwidth of the MTC cell according to system information, and determine the bandwidth (or in other words, length) of the reference symbol A according to the bandwidth of the MTC cell.

The serving base station may send a cell identifier of the non-MTC cell to the UE, and the UE may determine the reference symbol B according to the cell identifier of the non-MTC cell.

The serving base station may send, to the UE, information (first bandwidth information) indicating the bandwidth of the second non-MTC cell, so that the UE may determine the bandwidth of the second non-MTC cell according to the first bandwidth indication information, and further, may determine, according to a relationship between the bandwidth of the MTC cell and the bandwidth of the second non-MTC cell and a relationship between the bandwidth of the reference symbol A and the bandwidth of the reference symbol B, a relationship between an offset of the target carrier relative to the carrier of the non-MTC cell (or in other words, the position at which the time-frequency resource of the MTC cell is located in the time-frequency resource of the second non-MTC cell) and the position of the reference symbol A in the reference symbol B (where this relationship is referred to as a reference position relationship for short below).

The serving base station may send, to the UE, information (second carrier information) indicating the carrier of the second non-MTC cell, so that the UE may determine the carrier of the second non-MTC cell according to the second carrier information, thereby determining the offset of the target carrier (the carrier of the MTC cell) relative to the carrier of the second non-MTC cell. In this way, the position at which the time-frequency resource of the MTC cell is located in the time-frequency resource of the second non-MTC cell may be determined.

In this way, the UE may determine the position of the reference symbol A in the reference symbol B according to the position at which the time-frequency resource of the MTC cell is located in the time-frequency resource of the second non-MTC cell and the foregoing reference position relationship, thereby determining the reference symbol A.

It should be understood that, the above-listed method of sending, by the serving base station, the second carrier information to the UE so that the UE determines an offset of the target carrier (the carrier of the MTC cell) relative to the carrier of the second non-MTC cell is merely an exemplary description, and the present invention is not limited thereto, for example, the serving base station may also directly deliver, to the UE, information (offset information) indicating an offset of the carrier of the MTC cell relative to the carrier of the second non-MTC cell.

Optionally, the reference symbol indication information may further include second bandwidth information, and the second bandwidth information is used for indicating a bandwidth of the MTC cell.

Specifically, the embodiment of determining, by the UE, the bandwidth of the MTC cell according to the system information is listed above, but the present invention is not limited thereto, and the serving base station may also deliver, to the UE, information (second bandwidth information) indicating the bandwidth of the MTC cell.

Optionally, in this embodiment of the present invention, the measurement indication information includes the reference symbol indication information, and
the reference symbol indication information includes basic sequence information and port information, where the basic sequence information is used for indicating a basic sequence for generating the reference symbol of the MTC cell, and the port information is used for indicating a port of the reference symbol of the MTC cell.

Specifically, in this embodiment of the present invention, the MTC cell may not be configured based on the non-MTC cell, that is, the time-frequency resource of the MTC cell does not belong to the time-frequency resource of any non-MTC cell, and therefore, the serving base station separately configures a reference symbol (referred to as a reference symbol c below) for measuring the MTC cell and indicates the reference symbol to the UE.

In this embodiment of the present invention, the UE may determine the bandwidth of the MTC cell according to the system information, thereby determining a bandwidth of the reference symbol c according to the bandwidth of the MTC cell.

Moreover, the UE may determine the cell identifier of the MTC cell according to the system information or synchronization information, so as to generate, according to the cell identifier and a stipulated algorithm, a reference sequence c based on the basic sequence. In this embodiment of the present invention, a method of generating, by the UE according to the cell identifier and a stipulated algorithm, a reference sequence based on the basic sequence is the same as that in the prior art, and the description thereof is omitted herein to avoid repetition.

The serving base station may send, to the UE, information (basic sequence information) indicating a basic sequence for generating the reference symbol c, so that the UE may determine, according to the basic sequence information, the basic sequence for generating the reference symbol c.

The serving base station may send, to the UE, information (port information) indicating a port (specifically, a port number and a port quantity) used for the reference symbol c. In this way, the UE may determine, according to the port information, the port number and port quantity of the reference symbol c.

In this way, the UE may determine the reference symbol c according to the foregoing information.

Optionally, in this embodiment of the present invention, the reference symbol indication information may further include second bandwidth information, and the second bandwidth information is used for indicating the bandwidth of the MTC cell.

Optionally, in this embodiment of the present invention, the reference symbol indication information further includes the cell identifier of the MTC cell.

Specifically, the above-listed method of determining, by the UE, the bandwidth of the MTC cell according to the system information and method of determining, by the UE, the cell identifier of the MTC cell according to the system information or synchronization information are merely exemplary descriptions, and the present invention is not limited thereto, for example, the serving base station may also directly deliver, to the UE, information (second bandwidth information) indicating the bandwidth of the MTC cell, and/or the cell identifier of the MTC cell.

After acquiring the reference symbol of each MTC cell, the UE may measure each MTC cell according to the reference symbol. In addition, in this embodiment of the present invention, a method and a process of measuring, by the UE, the MTC cell according to the reference symbol are similar to those in the prior art, and descriptions thereof are omitted herein to avoid repetition.

### 3. Subframe indication information

A measurement manner of an MTC cell is the same as that of a non-MTC cell in the prior art. To measure an MTC cell, a piece of user equipment needs to continuously listen on and measure each subframe; however, MTC cells may exist only on some frames, and as a result, a measurement result is inaccurate.

In contrast, in this embodiment of the present invention, the serving base station may determine a subframe to which an MTC cell belongs, and notify the UE, so that the UE may listen on and measure only the subframe that includes the MTC cell, and therefore, the accuracy of measurement can be improved.

Optionally, in this embodiment of the present invention, the sending the measurement indication information to the user equipment includes:
sending the measurement indication information to the user equipment by using a radio resource control connection reconfiguration message.

Specifically, in this embodiment of the present invention, a remaining bit in the radio resource control connection reconfiguration message may be used to send the measurement indication information to the UE, or a newly defined extended bit is used to send the measurement indication information to the UE.

Optionally, the sending the measurement indication information to the user equipment by using a radio resource control connection reconfiguration message includes:
sending the measurement indication information to the user equipment by using the radio resource control connection reconfiguration message, where the measurement indication information is carried by a measurement object information element or a radio resource configuration information element in the radio resource control connection reconfiguration message.

Specifically, in this embodiment of the present invention, a remaining bit or a newly defined extended bit in a "measurement object" information element in the radio resource control connection reconfiguration message may be used to carry the measurement indication information. For example, when both first measurement width information and second measurement width information need to be transmitted, a "measurement width" sub-information element of the "measurement object" may carry both the first measurement width information and the second measurement width information, or may carry one of the first measurement width information and the second measurement width information, and another sub-information element in the "measurement object" carries the other one of the first measurement width information and the second measurement width information.

In addition, a remaining bit or a newly defined extended bit in a "radio resource configuration" information element in the radio resource control connection reconfiguration message may also be used to carry the foregoing measurement indication information.

It should be understood that, the above-listed message for carrying the measurement indication information and the position of the measurement indication information in the message are merely exemplary descriptions, and the present invention is not limited thereto, for example, new signaling for transmitting the measurement indication information may be added.

After measuring the MTC cell according to the foregoing measurement indication information, the UE may report a result of the measurement to the serving base station; it should be noted herein that, in this embodiment of the present invention, the measurement result of the MTC cell (first measurement report information) and a measurement result of the non-MTC cell (second measurement report information) may be carried in a same message, for example, in a measurement report message, or may be carried in different messages, which is not particularly limited in the present invention.

In S120, the serving base station may acquire the measurement result of the MTC cell, and communicate with the UE according to the measurement result, or in other words, control communication of the UE, which specifically may include controlling handover of the UE, configuration/reconfiguration of multiple carriers, data transmission, and the like. In this embodiment of the present invention, the foregoing process may be similar to that in the prior art, and the description thereof is omitted herein to avoid repetition.

In the communication method according to this embodiment of the present invention, a base station device sets different measurement bandwidths for an MTC cell and a non-MTC cell, so that a measurement effect of the MTC cell can be improved without affecting a measurement effect of the non-MTC cell. The base station device instructs, according to the MTC cell, a piece of user equipment to measure the MTC cell according to a reference symbol on a side corresponding to the MTC cell, so that the measurement effect of the MTC cell can be improved. The base station device instructs, according to the MTC cell, the user equipment to listen on and measure only a subframe that includes the MTC cell, so that the accuracy of the measurement on the MTC cell can be improved, thereby improving the measurement effect of the MTC cell.

FIG. 2 shows, from the perspective of a piece of user equipment, a schematic flowchart of a communication method 200 according to an embodiment of the present invention. As shown in FIG. 2, the method 200 includes:
S210: A piece of user equipment acquires at least one piece of measurement indication information sent by a base station device, where the measurement indication information includes first carrier information used for indicating a target carrier, at least one machine type communication MTC cell is configured on the target carrier, and the measurement indication information further includes at least one of the following information: first measurement bandwidth indication information, at least one piece of reference symbol indication information, and at least one piece of subframe indication information.

S220: The user equipment performs measurement according to the measurement indication information, and sends first measurement report information to the base station device according to a result of the measurement.

The first measurement bandwidth indication information is used for indicating a first measurement bandwidth, the first measurement bandwidth is used for measurement of the at least one MTC cell, the first measurement bandwidth is different from a second measurement bandwidth, and the second measurement bandwidth is used for measurement of a first non-MTC cell configured on the target carrier.

The reference symbol indication information is used for indicating a configuration of a reference symbol of a corresponding MTC cell, and the reference symbol of the MTC cell is used for measurement of the MTC cell.

The subframe indication information is used for indicating a subframe used by a corresponding MTC cell.

Specifically, for example, when a UE moves in a system, there is a situation in which communication quality of a current serving cell (or base station device) decreases, and the current serving cell (or base station device) cannot continue to serve the UE, and therefore, a process of handover or carrier configuration/reconfiguration of multiple carriers needs to be performed; the mobility of the UE (or in other words, handover and carrier configuration/reconfiguration of multiple carriers) needs to be supported by, for example, measurement using radio resource management (RRM, Radio Resource Management), that is, a network side device (specifically, a base station device currently serving the UE, which, for ease of understanding and description, is referred to as a serving base station below) controls, by means of measurement and reporting performed by the UE, handover of the UE or configuration/reconfiguration of multiple carriers. In addition, in a data transmission process, the UE also needs to measure and report, for example, quality of a channel, so that the base station can dynamically adjust a transmission format of data according to the a status of the channel.

The serving base station may deliver, to the UE, measurement indication information used for an MTC cell (which may include the current serving cell and one or more of neighboring cells of the UE).

In this way, in S210, the UE may receive the measurement indication information.

Optionally, the user equipment is capable of performing machine type communication. Specifically, the user equipment may send, to the serving base station, capability information indicating that the user equipment is capable of performing machine type communication.

Specifically, because the measurement indication information is used for measuring the MTC cell, the UE needs to be a piece of user equipment capable of performing machine type communication (where such user equipment may also be referred to as an MTC device). Moreover, for example, when the communication method 200 of this embodiment of the present invention is applied to an LTE system, the serving base station may further determine whether the UE is capable of performing machine type communication, and configure the measurement indication information for the UE when determining that the UE is capable of performing machine type communication. For example, the foregoing methods a to c may be listed as the method for determining, by the serving base station, whether the UE is capable of performing machine type communication.

In addition, in a case in which a current serving cell has multiple neighboring cells (specifically, MTC neighboring cells), the serving base station may configure multiple pieces of corresponding measurement indication information for the multiple neighboring cells (specifically, for carriers of the multiple neighboring cells, which are described in detail subsequently), so that the UE may measure the multiple neighboring cells according to the multiple pieces of measurement indication information. However, if the UE is limited by its communication capability and can measure only some cells among the multiple neighboring cells, the measurement indication information configured by the serving base station for other cells is useless, causing a waste of system communications resources. Therefore, in this embodiment of the present invention, the serving base station may determine the communication capability, or in other words, a measurement capability, of the UE in advance, that is, the serving base station may determine MTC cells that the UE is capable of measuring, so that the serving base station may configure and deliver, to the UE, measurement indication information of only the MTC cells that the UE is capable of measuring. Therefore, processing efficiency can be improved, and the waste of system communications resources can be reduced.

For example, the above methods d to f may be listed as the method for determining, by the serving base station, the communication capability of the UE.

In addition, when the serving base station needs to deliver, to the UE, multiple pieces of measurement indication information for multiple MTC cells, the multiple pieces of measurement indication information may correspond to carriers of the MTC cells. That is, the measurement indication information may include information (the first carrier information) about a cell (the target carrier) that can be measured by using the measurement indication information.

For example, when multiple MTC cells are configured on a same carrier (for example, bandwidths of the MTC cells are different), because the bandwidths of the MTC cells are all relatively small, for example, the bandwidths may be smaller than or equal to 1.4 MHz, a same measurement bandwidth that is relatively small may be used to measure the multiple MTC cells, for example, the measurement bandwidth may be smaller than or equal to 1.4 MHz; a function of the measurement bandwidth is described in detail subsequently. That is, in a case in which a carrier has multiple MTC cells (where the multiple MTC cells have a same center frequency but different bandwidths) thereon, the multiple MTC cells may share the first measurement bandwidth indication information in the measurement indication information.

In this way, the UE may determine, according to the first carrier information, a carrier (specifically, one or more MTC cells on the carrier) that can be measured by using the measurement indication information (specifically, the first measurement bandwidth indication information).

It should be understood that, the above-listed manner of determining the measurement indication information (one piece of measurement indication information corresponds to only one carrier) according to the carrier of the MTC cell is merely an exemplary description, and the present invention is not limited thereto. Further, one piece of measurement indication information may correspond to only one MTC cell, for example, in addition to the foregoing information (the first carrier information) for indicating the carrier of the MTC cell, information for indicating a bandwidth of the MTC cell may also be added to the measurement indication information.

In this way, the UE may determine, according to the first carrier information and the information for indicating the bandwidth of the MTC cell, the MTC cell that can be measured by using the measurement indication information.

Moreover, in this case, a measurement bandwidth corresponding to the MTC cell may further be determined according to the bandwidth of the MTC cell, that is, in a case in which one carrier has multiple MTC cells (where the multiple MTC cells have a same center frequency but different bandwidths), different measurement bandwidths are used to measure the multiple MTC cells.

In this embodiment of the present invention, when multiple MTC cells (for example, bandwidths of the MTC cells are different) are configured on a same carrier, because the bandwidths of the MTC cells are different, reference symbols used for measuring the MTC cells may also be different. In this case, a same piece of measurement indication information (which corresponds to one carrier) may include multiple pieces of reference symbol indication information, where the multiple pieces of reference symbol indication information are one-to-one corresponding to the multiple MTC cells, that is, one piece of reference symbol indication information is only used for indicating a configuration of one MTC cell. In addition, in this embodiment of the present invention, for example, the UE and the serving base station may differentiate the MTC cells according to the carrier and bandwidths.

In addition, optionally, in this embodiment of the present invention, the measurement indication information includes the at least one piece of subframe indication information, and the at least one piece of subframe indication information is one-to-one corresponding to the at least one MTC cell.

Specifically, when multiple MTC cells (for example, the MTC cells have different bandwidths) are configured on a same carrier, if the MTC cells are located in different subframes (or in other words, have different configurations on time domain resources), a same piece of measurement indication information (which corresponds to one carrier) may include multiple pieces of subframe indication information, where the multiple pieces of subframe indication information are one-to-one corresponding to the subframes in which the MTC cells are located. In addition, in this embodiment of the present invention, for example, the UE and the serving base station may differentiate the MTC cells according to the carrier and bandwidths.

Optionally, the measurement indication information includes one piece of subframe indication information, at least two MTC cells are configured on the target carrier, and the at least two MTC cells use a same subframe.

Specifically, when multiple MTC cells (for example, the MTC cells have different bandwidths) are configured on a same carrier, if the MTC cells are located in a same subframe (or in other words, have a same configuration on time domain resources), a same piece of measurement indication information (which corresponds to one carrier) may include one piece of subframe indication information.

In this embodiment of the present invention, the measurement indication information may include any combination of the following information: information (first measurement bandwidth indication information) for indicating a measurement bandwidth (first measurement bandwidth) used for measuring the MTC cell, information (reference symbol indication information) for indicating a reference symbol used for measuring the MTC cell, and information (subframe indication information) for indicating a subframe used by the MTC cell. Functions and use processes of the foregoing information are separately described below.

### 1. First measurement bandwidth indication information

Specifically, an MTC cell and a traditional cell (non-MTC cell) may have a same carrier (which may also be referred to as a center frequency), but have significantly different bandwidths, for example, the bandwidth of the traditional cell may be 20 MHz, while the bandwidth of the MTC cell is generally 1.4 MHz. At present, system cell measurement, for example, RRM measurement, is implemented in the following manner, that is, a base station configures, for a piece of user equipment, a parameter used for measurement, that is, "measurement object (Measurement Object)", so that the user equipment measures a system cell according to the measurement object. Only one unique "measurement object" is configured for one carrier, and the "measurement object" includes a parameter indicating a bandwidth for measurement, that is, "measurement bandwidth". The user equipment measures cells on the carrier according to the measurement bandwidth. However, because the MTC cell is a narrowband cell, and if measurement on the MTC cell needs to be ensured, the only way is to set the measurement bandwidth to a narrow bandwidth. However, if the user equipment further needs to measure another cell (a traditional cell) on the carrier, the narrow measurement bandwidth affects a measurement effect of the traditional cell. Similarly, if a wide measurement bandwidth is used to ensure the measurement effect of the traditional cell, a measurement effect of the MTC cell is affected.

In contrast, in this embodiment of the present invention, when both an MTC cell and a non-MTC cell are configured on a carrier, the serving base station may configure different measurement objects for the MTC cell and the non-MTC cell. Specifically, the measurement objects are measurement bandwidths, where a configuration method and a value of the measurement bandwidth (second measurement bandwidth) used for measuring the non-MTC cell may be the same as those in the prior art, and descriptions thereof are omitted herein to avoid repetition. Moreover, the serving base station may set, according to the bandwidth of the MTC cell, a measurement bandwidth (first measurement bandwidth) for measuring the MTC cell, for example, because the bandwidth of the MTC cell is generally 1.4 MHz, the serving base station may set the first measurement bandwidth to 1.4 MHz, that is, the first measurement bandwidth is the same as the bandwidth of the MTC cell, or the serving base station may also set the value of the first measurement bandwidth to be smaller than the bandwidth of the MTC cell, which is not particularly limited in the present invention.

After acquiring the measurement bandwidth (first measurement bandwidth) of each MTC cell, the UE may measure each MTC cell according to the measurement bandwidth. In addition, in this embodiment of the present invention, a method and a process of measuring, by the UE, the MTC cell according to the measurement bandwidth are similar to those in the prior art, and descriptions thereof are omitted herein to avoid repetition.

The measurement indication information includes the first measurement bandwidth indication information, the user equipment is capable of performing non-machine type communication, and
the method further includes:
acquiring, by the user equipment, second measurement bandwidth indication information that is sent by the base station device and used for indicating the second measurement bandwidth; and
performing, by the user equipment, measurement according to the second measurement bandwidth indication information, and sending second measurement report information to the base station device according to a result of the measurement.

Specifically, if the UE is only capable of performing machine type communication but is incapable of performing non-machine type communication (specifically, performing communication by using a traditional cell), or the UE is only capable of measuring an MTC cell but is incapable of measuring a non-MTC cell, the serving base station may deliver only the first measurement bandwidth indication information to the UE, so that the UE may measure, according to the first measurement bandwidth, only the MTC cell configured on the carrier, but does not measure the non-MTC cell configured on the carrier.

If the UE is not only capable of performing machine type communication but also capable of performing non-machine type communication (specifically, performing communication by using a traditional cell), or the UE is not only capable of measuring an MTC cell but also capable of measuring a non-MTC cell, the serving base station may deliver the first measurement bandwidth indication information and the second measurement bandwidth indication information to the UE, so that the UE may measure, according to the first measurement bandwidth, the MTC cell configured on the carrier, and measure, according to the second measurement bandwidth, the non-MTC cell configured on the carrier.

According to the communication method of this embodiment of the present invention, by configuring different measurement bandwidths for an MTC cell and a non-MTC cell on a same carrier, measurement effects of the MTC cell and the non-MTC cell can be improved.

### 2. Reference symbol indication information

In the prior art, an MTC cell may be configured according to a part of a resource (specifically, time-frequency resource) of a traditional cell, that is, although the MTC cell has a narrow bandwidth, a reference symbol used for measuring the MTC cell is still a reference symbol (wide-bandwidth reference symbol) of the traditional cell (wide-bandwidth cell), and therefore, a measurement effect may be affected.

In contrast, in this embodiment of the present invention, the serving base station may notify the UE of a reference symbol (referred to as a reference symbol A below for ease of differentiation) specially for measurement of an MTC cell; herein, "specially for measurement of an MTC cell" refers to that a reference symbol (referred to as a reference symbol B below for ease of differentiation) of a traditional cell is no longer used as the reference symbol A used for measuring the MTC cell; instead, the reference symbol used for measuring the MTC cell corresponds to the MTC cell, and specifically, corresponds to a bandwidth of the MTC cell.

Optionally, in this embodiment of the present invention, the measurement indication information includes the reference symbol indication information, a time-frequency resource of the MTC cell is configured based on a time-frequency resource of a second non-MTC cell, and the reference symbol of the MTC cell is configured based on a reference symbol of the second non-MTC cell, where the reference symbol of the second non-MTC cell is used for measurement of the second non-MTC cell; and
the reference symbol indication information is specifically used for indicating a position at which the time-frequency resource of the MTC cell is located in the time-frequency resource of the second non-MTC cell, or
the reference symbol indication information is specifically used for indicating a position at which the reference symbol of the MTC cell is located in the reference symbol of the second non-MTC cell.

Specifically, in this embodiment of the present invention, in a case in which the time-frequency resource of the MTC cell is configured according to the time-frequency resource of the traditional cell (second non-MTC cell), and specifically, a part of the time-frequency resource of the traditional cell is selected to serve as the time-frequency resource of the MTC cell, a part of the reference symbol may be selected from the reference symbol B according to the configuration of the MTC cell, to serve as the reference symbol A for measuring the MTC cell. Herein, it should be noted that, the carrier of the MTC cell may be the same as or different from the carrier of the second non-MTC cell, which is not particularly limited in the present invention. In addition, when the carrier of the MTC cell is the same as the carrier of the second non-MTC cell, the second non-MTC cell and the foregoing first non-MTC cell may be the same (having a same bandwidth) or different (having different bandwidths), which is not particularly limited in the present invention.

In this embodiment of the present invention, the serving base station may notify, by using the reference symbol indication information, the UE of the position at which the reference symbol A is located in the reference symbol B, so that the UE can acquire the reference symbol B, and determine the reference symbol B according to the reference symbol indication information. In this embodiment of the present invention, a method of acquiring, by the UE, the reference symbol B is the same as that in the prior art, and the description thereof is omitted herein to avoid repetition.

Alternatively, in this embodiment of the present invention, the position at which the time-frequency resource of the MTC cell is located in the time-frequency resource of the traditional cell is corresponding to the position of the reference symbol A in the reference symbol B, for example, if the time-frequency resource of the MTC cell is located at a central position in the time-frequency resource of the second non-MTC cell, the reference symbol A is also at a central position in the reference symbol B. In this way, the serving base station may notify, by using the reference symbol indication information, the UE of the position at which the time-frequency resource of the MTC cell is located in the time-frequency resource of the second non-MTC cell, so that the UE may acquire the reference symbol B, and determine, according to the position at which the time-frequency resource of the MTC cell is located in the time-frequency resource of the second non-MTC cell, the position of the reference symbol A in the reference symbol B, thereby determining the reference symbol B.

Optionally, in this embodiment of the present invention, the reference symbol indication information includes first bandwidth information, a cell identifier of the second non-MTC cell, second carrier information and/or offset information, where the first bandwidth information is used for indicating a bandwidth of the second non-MTC cell, the second carrier information is used for indicating a carrier of the second non-MTC cell, and the offset information is used for indicating an offset of the target carrier relative to the carrier of the second non-MTC cell, and
the performing, by the user equipment, measurement according to the measurement indication information specifically includes:
determining, by the user equipment, a bandwidth of the MTC cell according to system information;
determining, by the user equipment, the reference symbol of the MTC cell according to the reference symbol indication information and the bandwidth of the MTC cell; and
measuring, by the user equipment, the MTC cell according to the reference symbol of the MTC cell.

Alternatively, optionally, in this embodiment of the present invention, the reference symbol indication information includes second bandwidth information, first bandwidth information, a cell identifier of the second non-MTC cell, second carrier information and/or offset information, where the second bandwidth information is used for indicating a bandwidth of the MTC cell, the first bandwidth information is used for indicating a bandwidth of the second non-MTC cell, the second carrier information is used for indicating a carrier of the second non-MTC cell, and the offset information is used for indicating an offset of the target carrier relative to the carrier of the second non-MTC cell, and
the performing, by the user equipment, measurement according to the measurement indication information specifically includes:
determining, by the user equipment, the reference symbol of the MTC cell according to the reference symbol indication information; and
measuring, by the user equipment, the MTC cell according to the reference symbol of the MTC cell.

Specifically, for example, to obtain the position at which the time-frequency resource of the MTC cell is located in the time-frequency resource of the second non-MTC cell, the UE needs to know the bandwidth of the MTC cell, the carrier of the MTC cell, the bandwidth of the second non-MTC cell, the carrier of the second non-MTC cell, and a relationship between the position of the MTC cell in the second non-MTC cell and the position of the reference symbol A in the reference symbol B.

In this embodiment of the present invention, the UE may determine the bandwidth of the MTC cell according to the system information, and determine the bandwidth (or in other words, length) of the reference symbol A according to the bandwidth of the MTC cell.

The serving base station may send a cell identifier of the non-MTC cell to the UE, and the UE may determine the reference symbol B according to the cell identifier of the non-MTC cell.

The serving base station may send, to the UE, information (first bandwidth information) indicating the bandwidth of the second non-MTC cell, so that the UE may determine the bandwidth of the second non-MTC cell according to the first bandwidth indication information, and further, may determine, according to a relationship between the bandwidth of the MTC cell and the bandwidth of the second non-MTC cell and a relationship between the bandwidth of the reference symbol A and the bandwidth of the reference symbol B, a relationship between an offset of the target carrier relative to the carrier of the non-MTC cell (or in other words, the position at which the time-frequency resource of the MTC cell is located in the time-frequency resource of the second non-MTC cell) and the position of the reference symbol A in the reference symbol B (where this relationship is referred to as a reference position relationship for short below).

The serving base station may send, to the UE, information (second carrier information) indicating the carrier of the second non-MTC cell, so that the UE may determine the carrier of the second non-MTC cell according to the second carrier information, thereby determining the offset of the target carrier (the carrier of the MTC cell) relative to the carrier of the second non-MTC cell. In this way, the position at which the time-frequency resource of the MTC cell is located in the time-frequency resource of the second non-MTC cell may be determined.

In this way, the UE may determine the position of the reference symbol A in the reference symbol B according to the position at which the time-frequency resource of the MTC cell is located in the time-frequency resource of the second non-MTC cell and the foregoing reference position relationship, thereby determining the reference symbol A.

It should be understood that, the above-listed method of sending, by the serving base station, the second carrier information to the UE so that the UE determines an offset of the target carrier (the carrier of the MTC cell) relative to the carrier of the non-MTC cell is merely an exemplary description, and the present invention is not limited thereto, for example, the serving base station may also directly deliver, to the UE, information (offset information) indicating an offset of the carrier of the MTC cell relative to the carrier of the non-MTC cell.

Moreover, the embodiment of determining, by the UE, the bandwidth of the MTC cell according to the system information is listed above, but the present invention is not limited thereto, and the serving base station may also deliver, to the UE, information (second bandwidth information) indicating the bandwidth of the MTC cell.

Optionally, in this embodiment of the present invention, the measurement indication information includes the reference symbol indication information, and the reference symbol indication information includes basic sequence information and port information, where the basic sequence information is used for indicating a basic sequence for generating the reference symbol of the MTC cell, and the port information is used for indicating a port of the reference symbol of the MTC cell, and
the performing, by the user equipment, measurement according to the measurement indication information specifically includes:
determining, by the user equipment, a bandwidth of the MTC cell according to system information;
determining, by the user equipment, a cell identifier of the MTC cell according to the system information or synchronization information;
determining, by the user equipment, the reference symbol of the MTC cell according to the reference symbol indication information, the bandwidth of the MTC cell, and the cell identifier of the MTC cell; and
measuring, by the user equipment, the MTC cell according to the reference symbol of the MTC cell.

Alternatively, optionally, in this embodiment of the present invention, the measurement indication information includes the reference symbol indication information, and the reference symbol indication information includes second bandwidth information, basic sequence information and port information, where the basic sequence information is used for indicating a basic sequence for generating the reference symbol of the MTC cell, the port information is used for indicating a port of the reference symbol of the MTC cell, and the second bandwidth information is used for indicating a bandwidth of the MTC cell, and
the performing, by the user equipment, measurement according to the measurement indication information specifically includes:
determining, by the user equipment, a cell identifier of the MTC cell according to the system information or synchronization information;
determining, by the user equipment, the reference symbol of the MTC cell according to the reference symbol indication information and the cell identifier of the MTC cell; and
measuring, by the user equipment, the MTC cell according to the reference symbol of the MTC cell.

Alternatively, optionally, in this embodiment of the present invention, the measurement indication information includes the reference symbol indication information, and the reference symbol indication information includes a cell identifier of the MTC cell, basic sequence information and port information, where the basic sequence information is used for indicating a basic sequence for generating the reference symbol of the MTC cell, and the port information is used for indicating a port of the reference symbol of the MTC cell, and
the performing, by the user equipment, measurement according to the measurement indication information specifically includes:
determining, by the user equipment, a bandwidth of the MTC cell according to system information;
determining, by the user equipment, the reference symbol of the MTC cell according to the reference symbol indication information and the bandwidth of the MTC cell; and
measuring, by the user equipment, the MTC cell according to the reference symbol of the MTC cell.

Alternatively, optionally, in this embodiment of the present invention, the measurement indication information includes the reference symbol indication information, and the reference symbol indication information includes a cell identifier of the MTC cell, second bandwidth information, basic sequence information and port information, where the basic sequence information is used for indicating a basic sequence for generating the reference symbol of the MTC cell, the port information is used for indicating a port of the reference symbol of the MTC cell, and the second bandwidth information is used for indicating a bandwidth of the MTC cell, and
the performing, by the user equipment, measurement according to the measurement indication information specifically includes:
determining, by the user equipment, the reference symbol of the MTC cell according to the reference symbol indication information; and
measuring, by the user equipment, the MTC cell according to the reference symbol of the MTC cell.

Specifically, in this embodiment of the present invention, the MTC cell may not be configured based on the non-MTC cell, that is, the time-frequency resource of the MTC cell does not belong to a time-frequency resource of any non-MTC cell, and therefore, the serving base station separately configures a reference symbol (referred to as a reference symbol c below) for measuring the MTC cell and indicates the reference symbol to the UE.

In this embodiment of the present invention, the UE may determine the bandwidth of the MTC cell according to the system information, thereby determining a bandwidth of the reference symbol c according to the bandwidth of the MTC cell.

Moreover, the UE may determine the cell identifier of the MTC cell according to the system information or synchronization information, so as to generate, according to the cell identifier and a stipulated algorithm, a reference sequence c based on the basic sequence. In this embodiment of the present invention, a method of generating, by the UE according to the cell identifier and a stipulated algorithm, a reference sequence based on the basic sequence is the same as that in the prior art, and the description thereof is omitted herein to avoid repetition.

The serving base station may send, to the UE, information (basic sequence information) indicating a basic sequence for generating the reference symbol c, so that the UE may determine, according to the basic sequence information, the basic sequence for generating the reference symbol c.

The serving base station may send, to the UE, information (port information) indicating a port (specifically, a port number and a port quantity) used for the reference symbol c. In this way, the UE may determine, according to the port information, the port number and port quantity of the reference symbol c.

In this way, the UE may determine the reference symbol c according to the foregoing information.

It should be understood that, the above-listed method of determining, by the UE, the bandwidth of the MTC cell according to the system information and method of determining, by the UE, the cell identifier of the MTC cell according to the system information or synchronization information are merely exemplary descriptions, and the present invention is not limited thereto, for example, the serving base station may also directly deliver, to the UE, information (second bandwidth information) indicating the bandwidth of the MTC cell, and/or the cell identifier of the MTC cell.

After acquiring the reference symbol of each MTC cell, the UE may measure each MTC cell according to the reference symbol. In addition, in this embodiment of the present invention, a method and a process of measuring, by the UE, the MTC cell according to the reference symbol are similar to those in the prior art, and descriptions thereof are omitted herein to avoid repetition.

### 3. Subframe indication information

A measurement manner of an MTC cell is the same as that of a non-MTC cell in the prior art. To measure an MTC cell, a piece of user equipment needs to continuously listen on and measure each subframe; however, MTC cells may exist only on some frames, and as a result, a measurement result is inaccurate.

In contrast, in this embodiment of the present invention, the serving base station may determine a subframe to which an MTC cell belongs, and notify the UE, so that the UE may listen on and measure only the subframe that includes the MTC cell, and therefore, the accuracy of measurement can be improved.

Optionally, in this embodiment of the present invention, the acquiring, by a piece of user equipment, at least one piece of measurement indication information sent by a base station device includes:
receiving, by the user equipment, a radio resource control connection reconfiguration message that is sent by the base station device and includes the at least one piece of measurement indication information; and
acquiring, by the user equipment, the measurement indication information from the radio resource control connection reconfiguration message.

Specifically, in this embodiment of the present invention, a remaining bit in the radio resource control connection reconfiguration message may be used to send the measurement indication information to the UE, or a newly defined extended bit is used to send the measurement indication information to the UE.

Optionally, the measurement indication information is carried by a measurement object information element or an MTC cell configuration information element in the radio resource control connection reconfiguration message, and
the acquiring, by the user equipment, the measurement indication information from the radio resource control connection reconfiguration message includes:
acquiring, by the user equipment, the measurement indication information from the measurement object information element or the MTC cell configuration information element.

Specifically, in this embodiment of the present invention, a remaining bit or a newly defined extended bit in a "measurement object" information element in the radio resource control connection reconfiguration message may be used to carry the measurement indication information. For example, when both first measurement width information and second measurement width information need to be transmitted, a "measurement width" sub-information element of the "measurement object" may carry both the first measurement width information and the second measurement width information, or may carry one of the first measurement width information and the second measurement width information, and another sub-information element in the "measurement object" carries the other of the first measurement width information and the second measurement width information.

In addition, a remaining bit or a newly defined extended bit in a "radio resource configuration" information element in the radio resource control connection reconfiguration message may also be used to carry the foregoing measurement indication information.

It should be understood that, the above-listed message for carrying the measurement indication information and the position of the measurement indication information in the message are merely exemplary descriptions, and the present invention is not limited thereto, for example, new signaling for transmitting the measurement indication information may be added.

In S220, after measuring the MTC cell according to the foregoing measurement indication information, the UE may report a result of the measurement to the serving base station; it should be noted herein that, in this embodiment of the present invention, the measurement result of the MTC cell (first measurement report information) and a measurement result of the non-MTC cell (second measurement report information) may be carried in a same message, for example, a measurement report message, or may be carried in different messages, which is not particularly limited in the present invention.

The serving base station may acquire the measurement result of the MTC cell, and communicate with the UE according to the measurement result, or in other words, control communication of the UE, which specifically may include controlling handover of the UE, configuration/reconfiguration of multiple carriers, data transmission, and the like. In this embodiment of the present invention, the foregoing process may be similar to that in the prior art, and the description thereof is omitted herein to avoid repetition.

In the communication method according to this embodiment of the present invention, a base station device sets different measurement bandwidths for an MTC cell and a non-MTC cell, so that a measurement effect of the MTC cell can be improved without affecting a measurement effect of the non-MTC cell. The base station device instructs, according to the MTC cell, a piece of user equipment to measure the MTC cell according to a reference symbol on a side corresponding to the MTC cell, so that the measurement effect of the MTC cell can be improved. The base station device instructs, according to the MTC cell, the user equipment to listen on and measure only a subframe that includes the MTC cell, so that the accuracy of the measurement on the MTC cell can be improved, thereby improving the measurement effect of the MTC cell.

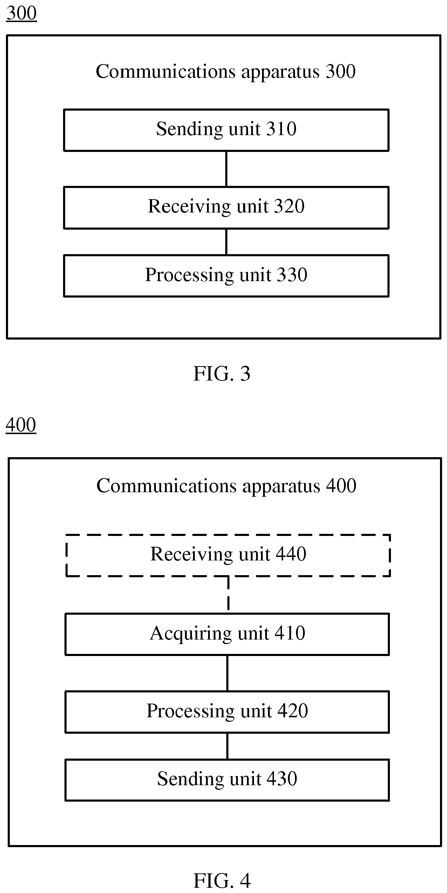

The communication methods according to the embodiments of the present invention are described in detail above with reference to FIG. 1 to FIG. 2, and in the following, communications apparatuses according to embodiments of the present invention are described in detail with reference to FIG. 3 to FIG. 4.

FIG. 3 shows a schematic block diagram of a communications apparatus 300 according to an embodiment of the present invention. As shown in FIG. 3, the apparatus 300 includes:
a sending unit 310, configured to send at least one piece of measurement indication information to a piece of user equipment, where the measurement indication information includes first carrier information used for indicating a target carrier, at least one machine type communication MTC cell is configured on the target carrier, and the measurement indication information further includes at least one of the following information: first measurement bandwidth indication information, at least one piece of reference symbol indication information, and at least one piece of subframe indication information;
a receiving unit 320, configured to receive first measurement report information that is sent by the user equipment after the user equipment performs measurement according to the measurement indication information; and
a processing unit 330, configured to control communication of the user equipment according to the first measurement report information, where
the first measurement bandwidth indication information is used for indicating a first measurement bandwidth, the first measurement bandwidth is used for measurement of the at least one MTC cell, the first measurement bandwidth is different from a second measurement bandwidth, and the second measurement bandwidth is used for measurement of a first non-MTC cell configured on the target carrier;
the reference symbol indication information is used for indicating a configuration of a reference symbol of a corresponding MTC cell, and the reference symbol of the MTC cell is used for measurement of the MTC cell; and
the subframe indication information is used for indicating a subframe used by a corresponding MTC cell.

Optionally, the measurement indication information includes the reference symbol indication information, a time-frequency resource of the MTC cell is configured based on a time-frequency resource of a second non-MTC cell, and the reference symbol of the MTC cell is configured based on a reference symbol of the second non-MTC cell, where the reference symbol of the second non-MTC cell is used for measurement of the second non-MTC cell; and
the reference symbol indication information is specifically used for indicating a position at which the time-frequency resource of the MTC cell is located in the time-frequency resource of the second non-MTC cell, or
the reference symbol indication information is specifically used for indicating a position at which the reference symbol of the MTC cell is located in the reference symbol of the second non-MTC cell.

Optionally, the reference symbol indication information includes first bandwidth information, a cell identifier of the second non-MTC cell, second carrier information and/or offset information, where the first bandwidth information is used for indicating a bandwidth of the second non-MTC cell, the second carrier information is used for indicating a carrier of the second non-MTC cell, and the offset information is used for indicating an offset of the target carrier relative to the carrier of the second non-MTC cell.

Optionally, the reference symbol indication information may further include second bandwidth information, and the second bandwidth information is used for indicating a bandwidth of the MTC cell.

Optionally, the measurement indication information includes the reference symbol indication information, and
the reference symbol indication information includes basic sequence information and port information, where the basic sequence information is used for indicating a basic sequence for generating the reference symbol of the MTC cell, and the port information is used for indicating a port of the reference symbol of the MTC cell.

Optionally, the reference symbol indication information may further include second bandwidth information, and the second bandwidth information is used for indicating a bandwidth of the MTC cell.

Optionally, the reference symbol indication information further includes a cell identifier of the MTC cell.

Optionally, the measurement indication information includes the at least one piece of subframe indication information, and the at least one piece of subframe indication information is one-to-one corresponding to the at least one MTC cell.

Optionally, the measurement indication information includes one piece of subframe indication information, at least two MTC cells are configured on the target carrier, and the at least two MTC cells use a same subframe.

Optionally, the sending unit 310 is specifically configured to send the measurement indication information to the user equipment by using a radio resource control connection reconfiguration message.

Optionally, the sending unit 310 is specifically configured to send the measurement indication information to the user equipment by using the radio resource control connection reconfiguration message, where the measurement indication information is carried by a measurement object information element or a radio resource configuration information element in the radio resource control connection reconfiguration message.

Optionally, the processing unit 330 is further configured to determine that the user equipment is capable of performing machine type communication.

Optionally, the processing unit 330 is further configured to determine a communication capability of the user equipment;
configured to determine, according to the communication capability of the user equipment, a neighboring cell that the user equipment is capable of measuring; and
configured to determine the at least one piece of measurement indication information according to a carrier of the neighboring cell.

Optionally, the measurement indication information includes the first measurement bandwidth indication information, and
the processing unit 330 is further configured to determine that the user equipment is capable of performing non-machine type communication;
the sending unit 310 is further configured to send, to the user equipment, second measurement bandwidth indication information used for indicating the second measurement bandwidth; and
the receiving unit 320 is further configured to receive second measurement report information that is sent by the user equipment after the user equipment performs measurement according to the second measurement bandwidth indication information, and communicate with the user equipment according to the second measurement report information.

The communications apparatus 300 according to this embodiment of the present invention may correspond to the base station device (serving base station) in the method according to the embodiment of the present invention. Moreover, the units, namely, modules, of the communications apparatus 300, and other operations and/or functions described above are separately for implementing corresponding processes in the method 100 in FIG. 1, and for the purpose of brevity, are not described herein again.

In the communications apparatus according to this embodiment of the present invention, a base station device sets different measurement bandwidths for an MTC cell and a non-MTC cell, so that a measurement effect of the MTC cell can be improved without affecting a measurement effect of the non-MTC cell. The base station device instructs, according to the MTC cell, a piece of user equipment to measure the MTC cell according to a reference symbol on a side corresponding to the MTC cell, so that the measurement effect of the MTC cell can be improved. The base station device instructs, according to the MTC cell, the user equipment to listen on and measure only a subframe that includes the MTC cell, so that the accuracy of the measurement on the MTC cell can be improved, thereby improving the measurement effect of the MTC cell.

FIG. 4 shows a schematic block diagram of a communications apparatus 400 according to an embodiment of the present invention. As shown in FIG. 4, the apparatus 400 includes:
an acquiring unit 410, configured to acquire at least one piece of measurement indication information sent by a base station device, where the measurement indication information includes first carrier information used for indicating a target carrier, at least one machine type communication MTC cell is configured on the target carrier, and the measurement indication information further includes at least one of the following information: first measurement bandwidth indication information, at least one piece of reference symbol indication information, and at least one piece of subframe indication information;
a processing unit 420, configured to perform measurement according to the measurement indication information; and
a sending unit 430, configured to send first measurement report information to the base station device according to a result of the measurement, where
the first measurement bandwidth indication information is used for indicating a first measurement bandwidth, the first measurement bandwidth is used for measurement of the at least one MTC cell, the first measurement bandwidth is different from a second measurement bandwidth, and the second measurement bandwidth is used for measurement of a first non-MTC cell configured on the target carrier;
the reference symbol indication information is used for indicating a configuration of a reference symbol of a corresponding MTC cell, and the reference symbol of the MTC cell is used for measurement of the MTC cell; and
the subframe indication information is used for indicating a subframe used by a corresponding MTC cell.

Optionally, the measurement indication information includes the reference symbol indication information, a time-frequency resource of the MTC cell is configured based on a time-frequency resource of a second non-MTC cell, and the reference symbol of the MTC cell is configured based on a reference symbol of the second non-MTC cell, where the reference symbol of the second non-MTC cell is used for measurement of the second non-MTC cell; and
the reference symbol indication information is specifically used for indicating a position at which the time-frequency resource of the MTC cell is located in the time-frequency resource of the second non-MTC cell, or
the reference symbol indication information is specifically used for indicating a position at which the reference symbol of the MTC cell is located in the reference symbol of the second non-MTC cell.

Optionally, the reference symbol indication information includes first bandwidth information, a cell identifier of the second non-MTC cell, second carrier information and/or offset information, where the first bandwidth information is used for indicating a bandwidth of the second non-MTC cell, the second carrier information is used for indicating a carrier of the second non-MTC cell, and the offset information is used for indicating an offset of the target carrier relative to the carrier of the second non-MTC cell, and
the processing unit 420 is specifically configured to determine a bandwidth of the MTC cell according to system information;
configured to determine the reference symbol of the MTC cell according to the reference symbol indication information and the bandwidth of the MTC cell; and
configured to measure the MTC cell according to the reference symbol of the MTC cell.

Optionally, the reference symbol indication information includes second bandwidth information, first bandwidth information, a cell identifier of the second non-MTC cell, second carrier information and/or offset information, where the second bandwidth information is used for indicating a bandwidth of the MTC cell, the first bandwidth information is used for indicating a bandwidth of the second non-MTC cell, the second carrier information is used for indicating a carrier of the second non-MTC cell, and the offset information is used for indicating an offset of the target carrier relative to the carrier of the second non-MTC cell, and
the processing unit 420 is specifically configured to determine the reference symbol of the MTC cell according to the reference symbol indication information; and
configured to measure the MTC cell according to the reference symbol of the MTC cell.

Optionally, the measurement indication information includes the reference symbol indication information, and the reference symbol indication information includes basic sequence information and port information, where the basic sequence information is used for indicating a basic sequence for generating the reference symbol of the MTC cell, and the port information is used for indicating a port of the reference symbol of the MTC cell, and
the processing unit 420 is specifically configured to determine a bandwidth of the MTC cell according to system information;
configured to determine a cell identifier of the MTC cell according to the system information or synchronization information;
configured to determine the reference symbol of the MTC cell according to the reference symbol indication information, the bandwidth of the MTC cell, and the cell identifier of the MTC cell; and
configured to measure the MTC cell according to the reference symbol of the MTC cell.

Optionally, the measurement indication information includes the reference symbol indication information, and the reference symbol indication information includes second bandwidth information, basic sequence information and port information, where the basic sequence information is used for indicating a basic sequence for generating the reference symbol of the MTC cell, the port information is used for indicating a port of the reference symbol of the MTC cell, and the second bandwidth information is used for indicating a bandwidth of the MTC cell, and
the processing unit 420 is specifically configured to determine a cell identifier of the MTC cell according to the system information or synchronization information;
configured to determine the reference symbol of the MTC cell according to the reference symbol indication information and the cell identifier of the MTC cell; and
configured to measure the MTC cell according to the reference symbol of the MTC cell.

Optionally, the measurement indication information includes the reference symbol indication information, and the reference symbol indication information includes a cell identifier of the MTC cell, basic sequence information and port information, where the basic sequence information is used for indicating a basic sequence for generating the reference symbol of the MTC cell, and the port information is used for indicating a port of the reference symbol of the MTC cell, and
the processing unit 420 is specifically configured to determine a bandwidth of the MTC cell according to system information;
configured to determine the reference symbol of the MTC cell according to the reference symbol indication information and the bandwidth of the MTC cell; and
configured to measure the MTC cell according to the reference symbol of the MTC cell.

Optionally, the measurement indication information includes the reference symbol indication information, and the reference symbol indication information includes a cell identifier of the MTC cell, second bandwidth information, basic sequence information and port information, where the basic sequence information is used for indicating a basic sequence for generating the reference symbol of the MTC cell, the port information is used for indicating a port of the reference symbol of the MTC cell, and the second bandwidth information is used for indicating a bandwidth of the MTC cell, and
the processing unit 420 is specifically configured to determine the reference symbol of the MTC cell according to the reference symbol indication information; and
configured to measure the MTC cell according to the reference symbol of the MTC cell.

Optionally, the measurement indication information includes the at least one piece of subframe indication information, and the at least one piece of subframe indication information is one-to-one corresponding to the at least one MTC cell.

Optionally, the measurement indication information includes one piece of subframe indication information, at least two MTC cells are configured on the target carrier, and the at least two MTC cells use a same subframe.

Optionally, the apparatus further includes:
a receiving unit 440, configured to receive a radio resource control connection reconfiguration message that is sent by the base station device and includes the at least one piece of measurement indication information; and
the acquiring unit 410 is specifically configured to acquire the measurement indication information from the radio resource control connection reconfiguration message.

Optionally, the measurement indication information is carried by a measurement object information element or an MTC cell configuration information element in the radio resource control connection reconfiguration message, and
the acquiring unit 410 is specifically configured to acquire the measurement indication information from the measurement object information element or the MTC cell configuration information element.

Optionally, the user equipment is capable of performing machine type communication.

Optionally, the measurement indication information includes the first measurement bandwidth indication information, the user equipment is capable of performing non-machine type communication, and
the acquiring unit 410 is further configured to acquire second measurement bandwidth indication information that is sent by the base station device and used for indicating the second measurement bandwidth; and
the processing unit 420 is further configured to perform measurement according to the second measurement bandwidth indication information; and
the sending unit 430 is further configured to send second measurement report information to the base station device according to a result of the measurement.

The communications apparatus 400 according to this embodiment of the present invention may correspond to the user equipment in the method according to the embodiment of the present invention, and moreover, the units, namely, modules, of the communications apparatus 400, and other operations and/or functions described above are separately for implementing corresponding processes in the method 200 in FIG. 2, and for the purpose of brevity, are not described herein again.

In the communications apparatus according to this embodiment of the present invention, a base station device sets different measurement bandwidths for an MTC cell and a non-MTC cell, so that a measurement effect of the MTC cell can be improved without affecting a measurement effect of the non-MTC cell. The base station device instructs, according to the MTC cell, a piece of user equipment to measure the MTC cell according to a reference symbol on a side corresponding to the MTC cell, so that the measurement effect of the MTC cell can be improved. The base station device instructs, according to the MTC cell, the user equipment to listen on and measure only a subframe that includes the MTC cell, so that the accuracy of the measurement on the MTC cell can be improved, thereby improving the measurement effect of the MTC cell.

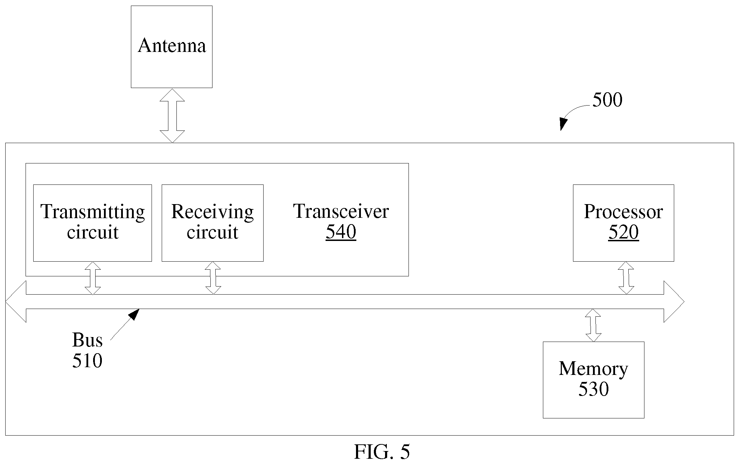

The communication methods according to the embodiments of the present invention are described in detail above with reference to FIG. 1 to FIG. 2, and in the following, communications devices according to embodiments of the present invention are described in detail with reference to FIG. 5 to FIG. 6.

FIG. 5 shows a schematic block diagram of a communications device 500 according to an embodiment of the present invention. As shown in FIG. 5, the device 500 includes:
a bus 510;
a processor 520 connected to the bus 510;
a memory 530 connected to the bus 510; and
a transceiver 540 connected to the bus 510, where
the processor 520 invokes, by using the bus 510, a program stored in the memory 530, so as to control the transceiver 540 to send at least one piece of measurement indication information to a piece of user equipment, where the measurement indication information includes first carrier information used for indicating a target carrier, at least one machine type communication MTC cell is configured on the target carrier, and the measurement indication information further includes at least one of the following information: first measurement bandwidth indication information, at least one piece of reference symbol indication information, and at least one piece of subframe indication information; and
control the transceiver 540 to receive first measurement report information that is sent by the user equipment after the user equipment performs measurement according to the measurement indication information, and communicate with the user equipment according to the first measurement report information, where
the first measurement bandwidth indication information is used for indicating a first measurement bandwidth, the first measurement bandwidth is used for measurement of the at least one MTC cell, the first measurement bandwidth is different from a second measurement bandwidth, and the second measurement bandwidth is used for measurement of a first non-MTC cell configured on the target carrier;
the reference symbol indication information is used for indicating a configuration of a reference symbol of a corresponding MTC cell, and the reference symbol of the MTC cell is used for measurement of the MTC cell; and
the subframe indication information is used for indicating a subframe used by a corresponding MTC cell.

Optionally, the measurement indication information includes the reference symbol indication information, a time-frequency resource of the MTC cell is configured based on a time-frequency resource of a second non-MTC cell, and the reference symbol of the MTC cell is configured based on a reference symbol of the second non-MTC cell, where the reference symbol of the second non-MTC cell is used for measurement of the second non-MTC cell; and
the reference symbol indication information is specifically used for indicating a position at which the time-frequency resource of the MTC cell is located in the time-frequency resource of the second non-MTC cell, or
the reference symbol indication information is specifically used for indicating a position at which the reference symbol of the MTC cell is located in the reference symbol of the second non-MTC cell.

Optionally, the reference symbol indication information includes first bandwidth information, a cell identifier of the second non-MTC cell, second carrier information and/or offset information, where the first bandwidth information is used for indicating a bandwidth of the second non-MTC cell, the second carrier information is used for indicating a carrier of the second non-MTC cell, and the offset information is used for indicating an offset of the target carrier relative to the carrier of the second non-MTC cell.

Optionally, the reference symbol indication information may further include second bandwidth information, and the second bandwidth information is used for indicating a bandwidth of the MTC cell.

Optionally, the measurement indication information includes the reference symbol indication information, and
the reference symbol indication information includes basic sequence information and port information, where the basic sequence information is used for indicating a basic sequence for generating the reference symbol of the MTC cell, and the port information is used for indicating a port of the reference symbol of the MTC cell.

Optionally, the reference symbol indication information may further include second bandwidth information, and the second bandwidth information is used for indicating a bandwidth of the MTC cell.

Optionally, the reference symbol indication information further includes a cell identifier of the MTC cell.

Optionally, the measurement indication information includes the at least one piece of subframe indication information, and the at least one piece of subframe indication information is one-to-one corresponding to the at least one MTC cell.

Optionally, the measurement indication information includes one piece of subframe indication information, at least two MTC cells are configured on the target carrier, and the at least two MTC cells use a same subframe.

Optionally, the processor 520 is specifically configured to control the transceiver 540 to send the measurement indication information to the user equipment by using a radio resource control connection reconfiguration message.

Optionally, the processor 520 is specifically configured to control the transceiver 540 to send the measurement indication information to the user equipment by using the radio resource control connection reconfiguration message, where the measurement indication information is carried by a measurement object information element or a radio resource configuration information element in the radio resource control connection reconfiguration message.

Optionally, the processor 520 is further configured to determine that the user equipment is capable of performing machine type communication.

Optionally, the processor 520 is further configured to determine a communication capability of the user equipment;
configured to determine, according to the communication capability of the user equipment, a neighboring cell that the user equipment is capable of measuring; and
configured to determine the at least one piece of measurement indication information according to a carrier of the neighboring cell.

Optionally, the processor 520 is further configured to determine that the user equipment is capable of performing non-machine type communication;
configured to control the transceiver 540 to send, to the user equipment, second measurement bandwidth indication information used for indicating the second measurement bandwidth; and
configured to control the transceiver 540 to receive second measurement report information that is sent by the user equipment after the user equipment performs measurement according to the second measurement bandwidth indication information, and communicate with the user equipment according to the second measurement report information.

The processor 520 controls operation of the communications device 500, and the processor 520 may also be referred to as a CPU. The memory 530 may include a read-only memory and a random access memory, and provides an instruction and data for the processor 520. A part of the memory 530 may further include a non-volatile random access memory (NVRAM). In a specific application, the communications device 500 may be embedded in or may be a wireless communications device such as a mobile phone, and may further include a carrier that accommodates a transmitting circuit and a receiving circuit, so as to allow data transmitting and receiving between the communications device 500 and a remote position. The transmitting circuit and the receiving circuit may be coupled to an antenna. The components of the communications device 500 may be coupled together by using the bus (which may also be referred to as a system bus) 510, where apart from a data bus, the bus 510 may further include a power supply bus, a control bus, and a status signal bus. For the purpose of clarity, all buses are marked as the bus 510 in the figure. The communications device 500 may further include a processing unit configured to process a signal, and besides, further includes a power controller and a decoding processor. Specifically, in different products, a decoder may be integrated with the processing unit.

The processor 520 may implement or execute each step and logic block diagram disclosed in the embodiments of the present invention. The processor may be a microprocessor or the processor may also be any regular processor, decoder, or the like. Steps of the method disclosed with reference to the embodiment of the present invention may be directly executed by a hardware processor, or executed by using a combination of hardware in the decoding processor and a software module. The software module may be located in a mature storage medium in the field, such as a random access memory, a flash memory, a read-only memory, a programmable read-only memory or an electrically erasable programmable memory, or a register. The storage medium is located in the memory 530, and the decoding unit or processing unit reads information in the memory 530, to implement the foregoing method steps together with hardware.

It should be understood that, in this embodiment of the present invention, the processor 520 may be a central processing unit (Central Processing Unit, referred to as a "CPU" for short), and the processor 520 may also be another general-purpose processor, a digital signal processor (DSP), an application-specific integrated circuit (ASIC), a field programmable gate array (FPGA) or another programmable logic device, a discrete gate or a transistor logic device, a discrete hardware component, or the like. The general-purpose processor may be a microprocessor or the processor may also be any regular processor, or the like.

In an implementation process, each step of the foregoing method may be implemented by a hardware integrated logic circuit in the processor 520 or by an instruction in a software form. Steps of the method disclosed with reference to the embodiment of the present invention may be directly executed by a hardware processor, or executed by using a combination of hardware in the processor and a software module. The software module may be located in a mature storage medium in the field, such as a random access memory, a flash memory, a read-only memory, a programmable read-only memory or an electrically erasable programmable memory, or a register. The storage medium is located in the memory 530, and the processor 520 reads information in the memory 530, to implement the foregoing method steps together with hardware. Details are not described herein again to avoid repetition.

The communications device 500 according to this embodiment of the present invention corresponds to the base station device (serving base station) in the method according to the embodiment of the present invention, and moreover, the units, namely, modules, of the communications device 500, and other operations and/or functions described above are separately for implementing corresponding processes in the method 100 in FIG. 1, and for the purpose of brevity, are not described herein again.

In the communications device according to this embodiment of the present invention, a base station device sets different measurement bandwidths for an MTC cell and a non-MTC cell, so that a measurement effect of the MTC cell can be improved without affecting a measurement effect of the non-MTC cell. The base station device instructs, according to the MTC cell, a piece of user equipment to measure the MTC cell according to a reference symbol on a side corresponding to the MTC cell, so that the measurement effect of the MTC cell can be improved. The base station device instructs, according to the MTC cell, the user equipment to listen on and measure only a subframe that includes the MTC cell, so that the accuracy of the measurement on the MTC cell can be improved, thereby improving the measurement effect of the MTC cell.

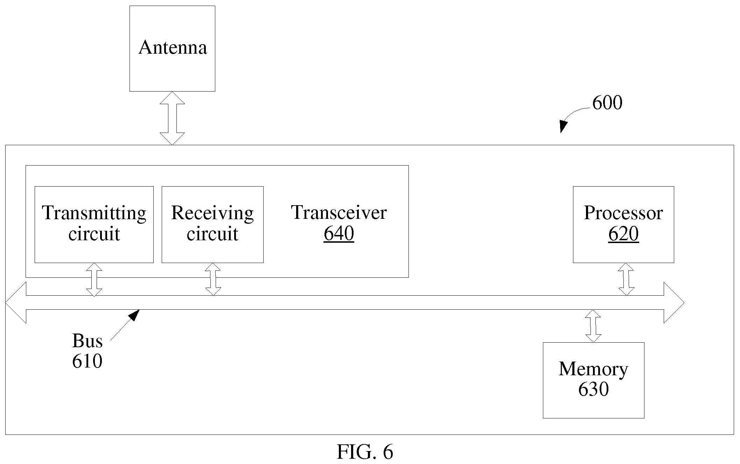

FIG. 6 shows a schematic block diagram of a communications device 600 according to an embodiment of the present invention. As shown in FIG. 6, the device 600 includes:
a bus 610;
a processor 620 connected to the bus 610;
a memory 630 connected to the bus 610; and
a transceiver 640 connected to the bus 610, where
the processor 620 invokes, by using the bus 610, a program stored in the memory 630, so as to acquire at least one piece of measurement indication information sent by a base station device, where the measurement indication information includes first carrier information used for indicating a target carrier, at least one machine type communication MTC cell is configured on the target carrier, and the measurement indication information further includes at least one of the following information: first measurement bandwidth indication information, at least one piece of reference symbol indication information, and at least one piece of subframe indication information; and
perform measurement according to the measurement indication information, and control, according to a result of the measurement, the transceiver 640 to send first measurement report information to the base station device, where
the first measurement bandwidth indication information is used for indicating a first measurement bandwidth, the first measurement bandwidth is used for measurement of the at least one MTC cell, the first measurement bandwidth is different from a second measurement bandwidth, and the second measurement bandwidth is used for measurement of a first non-MTC cell configured on the target carrier;
the reference symbol indication information is used for indicating a configuration of a reference symbol of a corresponding MTC cell, and the reference symbol of the MTC cell is used for measurement of the MTC cell; and
the subframe indication information is used for indicating a subframe used by a corresponding MTC cell.

Optionally, the measurement indication information includes the reference symbol indication information, a time-frequency resource of the MTC cell is configured based on a time-frequency resource of a second non-MTC cell, and the reference symbol of the MTC cell is configured based on a reference symbol of the second non-MTC cell, where the reference symbol of the second non-MTC cell is used for measurement of the second non-MTC cell; and
the reference symbol indication information is specifically used for indicating a position at which the time-frequency resource of the MTC cell is located in the time-frequency resource of the second non-MTC cell, or
the reference symbol indication information is specifically used for indicating a position at which the reference symbol of the MTC cell is located in the reference symbol of the second non-MTC cell.

Optionally, the reference symbol indication information includes first bandwidth information, a cell identifier of the second non-MTC cell, second carrier information and/or offset information, where the first bandwidth information is used for indicating a bandwidth of the second non-MTC cell, the second carrier information is used for indicating a carrier of the second non-MTC cell, and the offset information is used for indicating an offset of the target carrier relative to the carrier of the second non-MTC cell, and
the processor 620 is specifically configured to determine a bandwidth of the MTC cell according to system information;
configured to determine the reference symbol of the MTC cell according to the reference symbol indication information and the bandwidth of the MTC cell; and
configured to measure the MTC cell according to the reference symbol of the MTC cell.

Optionally, the reference symbol indication information includes second bandwidth information, first bandwidth information, a cell identifier of the second non-MTC cell, second carrier information and/or offset information, where the second bandwidth information is used for indicating a bandwidth of the MTC cell, the first bandwidth information is used for indicating a bandwidth of the second non-MTC cell, the second carrier information is used for indicating a carrier of the second non-MTC cell, and the offset information is used for indicating an offset of the target carrier relative to the carrier of the second non-MTC cell, and
the processor 620 is specifically configured to determine the reference symbol of the MTC cell according to the reference symbol indication information; and
configured to measure the MTC cell according to the reference symbol of the MTC cell.

Optionally, the measurement indication information includes the reference symbol indication information, and the reference symbol indication information includes basic sequence information and port information, where the basic sequence information is used for indicating a basic sequence for generating the reference symbol of the MTC cell, and the port information is used for indicating a port of the reference symbol of the MTC cell, and
the processor 620 is specifically configured to determine a bandwidth of the MTC cell according to system information;
configured to determine a cell identifier of the MTC cell according to the system information or synchronization information;
configured to determine the reference symbol of the MTC cell according to the reference symbol indication information, the bandwidth of the MTC cell, and the cell identifier of the MTC cell; and
configured to measure the MTC cell according to the reference symbol of the MTC cell.

Optionally, the measurement indication information includes the reference symbol indication information, and the reference symbol indication information includes second bandwidth information, basic sequence information and port information, where the basic sequence information is used for indicating a basic sequence for generating the reference symbol of the MTC cell, the port information is used for indicating a port of the reference symbol of the MTC cell, and the second bandwidth information is used for indicating a bandwidth of the MTC cell, and
the processor 620 is configured to determine a cell identifier of the MTC cell according to the system information or synchronization information;
configured to determine the reference symbol of the MTC cell according to the reference symbol indication information and the cell identifier of the MTC cell; and
configured to measure the MTC cell according to the reference symbol of the MTC cell.

Optionally, the measurement indication information includes the reference symbol indication information, and the reference symbol indication information includes a cell identifier of the MTC cell, basic sequence information and port information, where the basic sequence information is used for indicating a basic sequence for generating the reference symbol of the MTC cell, and the port information is used for indicating a port of the reference symbol of the MTC cell, and
the processor 620 is specifically configured to determine a bandwidth of the MTC cell according to system information;
configured to determine the reference symbol of the MTC cell according to the reference symbol indication information and the bandwidth of the MTC cell; and
configured to measure the MTC cell according to the reference symbol of the MTC cell.

Optionally, the measurement indication information includes the reference symbol indication information, and the reference symbol indication information includes a cell identifier of the MTC cell, second bandwidth information, basic sequence information and port information, where the basic sequence information is used for indicating a basic sequence for generating the reference symbol of the MTC cell, the port information is used for indicating a port of the reference symbol of the MTC cell, and the second bandwidth information is used for indicating a bandwidth of the MTC cell, and
the processor 620 is specifically configured to determine the reference symbol of the MTC cell according to the reference symbol indication information; and
configured to measure the MTC cell according to the reference symbol of the MTC cell.

Optionally, the measurement indication information includes the at least one piece of subframe indication information, and the at least one piece of subframe indication information is one-to-one corresponding to the at least one MTC cell.

Optionally, the measurement indication information includes one piece of subframe indication information, at least two MTC cells are configured on the target carrier, and the at least two MTC cells use a same subframe.

Optionally, the processor 620 is specifically configured control the transceiver 640 to receive a radio resource control connection reconfiguration message that is sent by the base station device and includes the at least one piece of measurement indication information; and
configured to acquire the measurement indication information from the radio resource control connection reconfiguration message.

Optionally, the measurement indication information is carried by a measurement object information element or an MTC cell configuration information element in the radio resource control connection reconfiguration message, and
the processor 620 is specifically configured to acquire the measurement indication information from the measurement object information element or the MTC cell configuration information element.

Optionally, the user equipment is capable of performing machine type communication.

Optionally, the processor 620 is specifically configured to acquire second measurement bandwidth indication information that is sent by the base station device and used for indicating the second measurement bandwidth; and
configured to perform measurement according to the second measurement indication information, and control, according to a result of the measurement, the transceiver 640 to send second measurement report information to the base station device.

The processor 620 controls operation of the communications device 600, and the processor 620 may also be referred to as a CPU. The memory 630 may include a read-only memory and a random access memory, and provides an instruction and data for the processor 620. A part of the memory 630 may further include a non-volatile random access memory (NVRAM). In a specific application, the communications device 600 may be embedded in or may be a wireless communications device such as a mobile phone, and may further include a carrier that accommodates a transmitting circuit and a receiving circuit, so as to allow data transmitting and receiving between the communications device 600 and a remote position. The transmitting circuit and the receiving circuit may be coupled to an antenna. The components of the communications device 600 may be coupled together by using the bus (which may also be referred to as a system bus) 610, where apart from a data bus, the bus 610 may further include a power supply bus, a control bus, and a status signal bus. For the purpose of clarity, all buses are marked as the bus 610 in the figure. The communications device 600 may further include a processing unit configured to process a signal, and besides, further includes a power controller and a decoding processor. Specifically, in different products, a decoder may be integrated with the processing unit.

The processor 620 may implement or execute each step and logic block diagram disclosed in the embodiments of the present invention. The processor may be a microprocessor or the processor may also be any regular processor, decoder, or the like. Steps of the method disclosed with reference to the embodiment of the present invention may be directly executed by a hardware processor, or executed by using a combination of hardware in the decoding processor and a software module. The software module may be located in a mature storage medium in the field, such as a random access memory, a flash memory, a read-only memory, a programmable read-only memory or an electrically erasable programmable memory, or a register. The storage medium is located in the memory 630, and the decoding unit or processing unit reads information in the memory 630, to implement the foregoing method steps together with hardware.

It should be understood that, in this embodiment of the present invention, the processor 620 may be a central processing unit (Central Processing Unit, referred to as a "CPU" for short), and the processor 620 may also be another general-purpose processor, a digital signal processor (DSP), an application-specific integrated circuit (ASIC), a field programmable gate array (FPGA) or another programmable logic device, a discrete gate or a transistor logic device, a discrete hardware component, or the like. The general-purpose processor may be a microprocessor or the processor may also be any regular processor, or the like.

In an implementation process, each step of the foregoing method may be implemented by a hardware integrated logic circuit in the processor 620 or by an instruction in a software form. Steps of the method disclosed with reference to the embodiment of the present invention may be directly executed by a hardware processor, or executed by using a combination of hardware in the processor and a software module. The software module may be located in a mature storage medium in the field, such as a random access memory, a flash memory, a read-only memory, a programmable read-only memory or an electrically erasable programmable memory, or a register. The storage medium is located in the memory 630, and the processor 620 reads information in the memory 630, to implement the foregoing method steps together with hardware. Details are not described herein again to avoid repetition.

The communications device 600 according to this embodiment of the present invention may correspond to the user equipment in the method according to the embodiment of the present invention, and moreover, the units, namely, modules, of the communications device 600, and other operations and/or functions described above are separately for implementing corresponding processes in the method 200 in FIG. 2, and for the purpose of brevity, are not described herein again.

In the communications device according to this embodiment of the present invention, a base station device sets different measurement bandwidths for an MTC cell and a non-MTC cell, so that a measurement effect of the MTC cell can be improved without affecting a measurement effect of the non-MTC cell. The base station device instructs, according to the MTC cell, a piece of user equipment to measure the MTC cell according to a reference symbol on a side corresponding to the MTC cell, so that the measurement effect of the MTC cell can be improved. The base station device instructs, according to the MTC cell, the user equipment to listen on and measure only a subframe that includes the MTC cell, so that the accuracy of the measurement on the MTC cell can be improved, thereby improving the measurement effect of the MTC cell.

The term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

It should be understood that sequence numbers of the foregoing processes do not mean execution sequences in various embodiments of the present invention. The execution sequences of the processes should be determined according to functions and internal logic of the processes, and should not be construed as any limitation on the implementation processes of the embodiments of the present invention.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of the present invention essentially, or the part contributing to the prior art, or some of the technical solutions may be implemented in a form of a software product. The software product is stored in a storage medium, and includes several instructions for instructing a computer device (which may be a personal computer, a server, or a network device) to perform all or some of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A communication method, wherein the method comprises:
sending, by a base station device, at least one piece of measurement indication information to a piece of user equipment, wherein the measurement indication information comprises first carrier information used for indicating a target carrier, at least one machine type communication MTC cell is configured on the target carrier, and the measurement indication information further comprises at least one of the following information: first measurement bandwidth indication information, at least one piece of reference symbol indication information, and at least one piece of subframe indication information; and
receiving, by the base station device, first measurement report information that is sent by the user equipment after the user equipment performs measurement according to the measurement indication information, and communicating with the user equipment according to the first measurement report information, wherein
the first measurement bandwidth indication information is used for indicating a first measurement bandwidth, the first measurement bandwidth is used for measurement of the at least one MTC cell, the first measurement bandwidth is different from a second measurement bandwidth, and the second measurement bandwidth is used for measurement of a first non-MTC cell configured on the target carrier;
the reference symbol indication information is used for indicating a configuration of a reference symbol of a corresponding MTC cell, and the reference symbol of the MTC cell is used for measurement of the MTC cell; and
the subframe indication information is used for indicating a subframe used by a corresponding MTC cell;
wherein before the sending, by the base station device, at least one piece of measurement indication information to the user equipment, the method further comprises:
determining, by the base station device, a communication capability of the user equipment;
determining, by the base station device according to the communication capability of the user equipment, a neighboring cell that the user equipment is capable of measuring; and
determining, by the base station device, the at least one piece of measurement indication information according to a carrier of the neighboring cell.

2. The method according to claim 1, wherein the measurement indication information comprises the reference symbol indication information, a time-frequency resource of the MTC cell is configured based on a time-frequency resource of a second non-MTC cell, and the reference symbol of the MTC cell is configured based on a reference symbol of the second non-MTC cell, wherein the reference symbol of the second non-MTC cell is used for measurement of the second non-MTC cell; and
the reference symbol indication information is specifically used for indicating a position at which the time-frequency resource of the MTC cell is located in the time-frequency resource of the second non-MTC cell, or
the reference symbol indication information is specifically used for indicating a position at which the reference symbol of the MTC cell is located in the reference symbol of the second non-MTC cell.

3. The method according to claim 2, wherein the reference symbol indication information comprises first bandwidth information, a cell identifier of the second non-MTC cell, and at least one of second carrier information and offset information, wherein the first bandwidth information is used for indicating a bandwidth of the second non-MTC cell, the second carrier information is used for indicating a carrier of the second non-MTC cell, and the offset information is used for indicating an offset of the target carrier relative to the carrier of the second non-MTC cell.

4. The method according to claim 3, wherein the reference symbol indication information further comprises second bandwidth information, and the second bandwidth information is used for indicating a bandwidth of the MTC cell.

5. The method according to claim 1, wherein the measurement indication information comprises the reference symbol indication information, and
the reference symbol indication information comprises basic sequence information and port information, wherein the basic sequence information is used for indicating a basic sequence for generating the reference symbol of the MTC cell, and the port information is used for indicating a port of the reference symbol of the MTC cell.

6. The method according to claim 5, wherein the reference symbol indication information further comprises second bandwidth information, and the second bandwidth information is used for indicating a bandwidth of the MTC cell.

7. The method according to claim 5 or 6, wherein the reference symbol indication information further comprises a cell identifier of the MTC cell.

8. The method according to any one of claims 1 to 7, wherein the measurement indication information comprises the at least one piece of subframe indication information, and the at least one piece of subframe indication information is one-to-one corresponding to the at least one MTC cell; or
wherein the measurement indication information comprises one piece of subframe indication information, at least two MTC cells are configured on the target carrier, and the at least two MTC cells use a same subframe.

9. The method according to any one of claims 1 to 8, wherein the sending the measurement indication information to the user equipment comprises:
sending the measurement indication information to the user equipment by using a radio resource control connection reconfiguration message.

10. The method according to any one of claims 1 to 9, wherein before the sending, by a base station device, at least one piece of measurement indication information to a piece of user equipment, the method further comprises:
determining, by the base station device, that the user equipment is capable of performing machine type communication.

11. A communication method, wherein the method comprises:
acquiring, by a piece of user equipment, at least one piece of measurement indication information sent by a base station device, wherein the measurement indication information comprises first carrier information used for indicating a target carrier, at least one machine type communication MTC cell is configured on the target carrier, and the measurement indication information further comprises at least one of the following information: first measurement bandwidth indication information, at least one piece of reference symbol indication information, and at least one piece of subframe indication information; and
performing, by the user equipment, measurement according to the measurement indication information, and sending first measurement report information to the base station device according to a result of the measurement, wherein
the first measurement bandwidth indication information is used for indicating a first measurement bandwidth, the first measurement bandwidth is used for measurement of the at least one MTC cell, the first measurement bandwidth is different from a second measurement bandwidth, and the second measurement bandwidth is used for measurement of a first non-MTC cell configured on the target carrier;
the reference symbol indication information is used for indicating a configuration of a reference symbol of a corresponding MTC cell, and the reference symbol of the MTC cell is used for measurement of the MTC cell; and
the subframe indication information is used for indicating a subframe used by a corresponding MTC cell;
wherein a communication capability of the piece of equipment is notified to the base station device in advance when the piece of equipment accesses or hands over a network for determining the communication capability of the piece of equipment by the base station.

12. The method according to claim 11, wherein the measurement indication information comprises the reference symbol indication information, a time-frequency resource of the MTC cell is configured based on a time-frequency resource of a second non-MTC cell, and the reference symbol of the MTC cell is configured based on a reference symbol of the second non-MTC cell, wherein the reference symbol of the second non-MTC cell is used for measurement of the second non-MTC cell; and
the reference symbol indication information is specifically used for indicating a position at which the time-frequency resource of the MTC cell is located in the time-frequency resource of the second non-MTC cell, or
the reference symbol indication information is specifically used for indicating a position at which the reference symbol of the MTC cell is located in the reference symbol of the second non-MTC cell.

13. The method according to claim 12, wherein the reference symbol indication information comprises first bandwidth information, a cell identifier of the second non-MTC cell, and at least one of second carrier information and offset information, wherein the first bandwidth information is used for indicating a bandwidth of the second non-MTC cell, the second carrier information is used for indicating a carrier of the second non-MTC cell, and the offset information is used for indicating an offset of the target carrier relative to the carrier of the second non-MTC cell, and
the performing, by the user equipment, measurement according to the measurement indication information specifically comprises:
determining, by the user equipment, a bandwidth of the MTC cell according to system information;
determining, by the user equipment, the reference symbol of the MTC cell according to the reference symbol indication information and the bandwidth of the MTC cell; and
measuring, by the user equipment, the MTC cell according to the reference symbol of the MTC cell; or
wherein the reference symbol indication information comprises second bandwidth information, first bandwidth information, a cell identifier of the second non-MTC cell, and at least one of second carrier information and offset information, wherein the second bandwidth information is used for indicating a bandwidth of the MTC cell, the first bandwidth information is used for indicating a bandwidth of the second non-MTC cell, the second carrier information is used for indicating a carrier of the second non-MTC cell, and the offset information is used for indicating an offset of the target carrier relative to the carrier of the second non-MTC cell, and
the performing by the user equipment, measurement according to the measurement indication information specifically comprises:
determining, by the user equipment, the reference symbol of the MTC cell according to the reference symbol indication information; and
measuring, by the user equipment, the MTC cell according to the reference symbol of the MTC cell.

14. A communications apparatus, wherein the apparatus comprises:
a sending unit (310), configured to execute the sending step according to any one of claims 1 to 10;
a receiving unit (320), configured to execute the receiving step according to any one of claims 1 to 10; and
a processing unit (330), configured to execute the communicating or determining step according to any one of claims 1 to 10.

15. A communications apparatus, wherein the apparatus comprises:
an acquiring unit (410), configured to execute the acquiring step according to any one of claims 11 to 13;
a processing unit (420), configured to execute the measuring step according to any one of claims 11 to 13; and
a sending unit (430), configured to execute the sending step according to any one of claims 11 to 13.

## Patentansprüche

1. Kommunikationsverfahren, wobei das Verfahren Folgendes umfasst:
Senden durch eine Basisstationsvorrichtung von mindestens einer Messanzeigeinformation an eine Teilnehmereinrichtung, wobei die Messanzeigeinformationen erste Trägerinformationen umfassen, die zum Anzeigen eines Zielträgers verwendet werden, mindestens eine Maschinentypkommunikations(MTC)-Zelle auf dem Zielträger ausgelegt ist und die Messanzeigeinformation ferner mindestens eine der folgenden Informationen umfasst: erste Messbandbreitenanzeigeinformationen, mindestens eine Referenzsymbolanzeigeinformation und mindestens eine Unterrahmenanzeigeinformation; und
Empfangen durch die Basisstationsvorrichtung von ersten Messberichtsinformationen, die von der Teilnehmereinrichtung gesendet werden, nachdem die Teilnehmereinrichtung eine Messung gemäß den Messanzeigeinformationen durchgeführt hat, und Kommunizieren mit der Teilnehmereinrichtung gemäß den ersten Messberichtsinformationen, wobei die ersten Messbandbreitenanzeigeinformationen zum Anzeigen einer ersten Messbandbreite verwendet werden, die erste Messbandbreite für eine Messung der mindestens einen MTC-Zelle verwendet wird, die erste Messbandbreite sich von einer zweiten Messbandbreite unterscheidet und die zweite Messbandbreite für eine Messung einer ersten Nicht-MTC-Zelle, die auf dem Zielträger ausgelegt ist, verwendet wird;
die Referenzsymbolanzeigeinformationen zum Anzeigen einer Auslegung eines Referenzsymbols einer entsprechenden MTC-Zelle verwendet werden und das Referenzsymbol der MTC-Zelle für eine Messung der MTC-Zelle verwendet wird und
die Unterrahmenanzeigeinformationen zum Anzeigen eines Unterrahmens, der von einer entsprechenden MTC-Zelle verwendet wird, verwendet werden;
wobei vor dem Senden durch die Basisstationsvorrichtung von mindestens einer Messanzeigeinformation an die Teilnehmereinrichtung das Verfahren ferner Folgendes umfasst:
Bestimmen durch die Basisstationsvorrichtung einer Kommunikationsfähigkeit der Teilnehmereinrichtung;
Bestimmen durch die Basisstationsvorrichtung gemäß der Kommunikationsfähigkeit der Teilnehmereinrichtung einer benachbarten Zelle, die von der Teilnehmereinrichtung gemessen werden kann; und
Bestimmen durch die Basisstationsvorrichtung der mindestens einen Messanzeigeinformation gemäß einem Träger der benachbarten Zelle.

2. Verfahren nach Anspruch 1, wobei die Messanzeigeinformationen die Referenzsymbolanzeigeinformationen umfassen, eine Zeitfrequenzressource der MTC-Zelle auf Basis einer Zeitfrequenzressource einer zweiten Nicht-MTC-Zelle ausgelegt ist und das Referenzsymbol der MTC-Zelle auf Basis eines Referenzsymbols der zweiten Nicht-MTC-Zelle ausgelegt ist, wobei das Referenzsymbol der zweiten Nicht-MTC-Zelle zum Messen der zweiten Nicht-MTC-Zelle verwendet wird; und
die Referenzsymbolanzeigeinformationen speziell zum Anzeigen einer Position, in der sich die Zeitfrequenzressource der MTC-Zelle in der Zeitfrequenzressource der zweiten Nicht-MTC-Zelle befindet, verwendet werden, oder
die Referenzsymbolanzeigeinformationen speziell zum Anzeigen einer Position, in der sich das Referenzsymbol der MTC-Zelle im Referenzsymbol der zweiten Nicht-MTC-Zelle befindet, verwendet werden.

3. Verfahren nach Anspruch 2, wobei die Referenzsymbolanzeigeinformationen erste Bandbreiteninformationen, eine Zellkennung der zweiten Nicht-MTC-Zelle und mindestens eines von zweiten Trägerinformationen und Versatzinformationen umfassen, wobei die ersten Bandbreiteninformationen zum Anzeigen einer Bandbreite der zweiten Nicht-MTC-Zelle verwendet werden, die zweiten Trägerinformationen zum Anzeigen eines Trägers der zweiten Nicht-MTC-Zelle verwendet werden und die Versatzinformationen zum Anzeigen eines Versatzes des Zielträgers relativ zum Träger der zweiten Nicht-MTC-Zelle verwendet werden.

4. Verfahren nach Anspruch 3, wobei die Referenzsymbolanzeigeinformationen ferner zweite Bandbreiteninformationen umfassen und die zweiten Bandbreiteninformationen zum Anzeigen einer Bandbreite der MTC-Zelle verwendet werden.

5. Verfahren nach Anspruch 1, wobei die Messanzeigeinformationen die Referenzsymbolanzeigeinformationen umfassen und
die Referenzsymbolanzeigeinformationen Basissequenzinformationen und Anschlussinformationen umfassen, wobei die Basissequenzinformationen zum Anzeigen einer Basissequenz zum Erzeugen des Referenzsymbols der MTC-Zelle verwendet werden und die Anschlussinformationen zum Anzeigen eines Anschlusses des Referenzsymbols der MTC-Zelle verwendet werden.

6. Verfahren nach Anspruch 5, wobei die Referenzsymbolanzeigeinformationen ferner zweite Bandbreiteninformationen umfassen und die zweiten Bandbreiteninformationen zum Anzeigen einer Bandbreite der MTC-Zelle verwendet werden.

7. Verfahren nach Anspruch 5 oder 6, wobei die Referenzsymbolanzeigeinformationen ferner eine Zellkennung der MTC-Zelle umfassen.

8. Verfahren nach einem der Ansprüche 1 bis 7, wobei die Messanzeigeinformationen die mindestens eine Unterrahmenanzeigeinformation umfassen und die mindestens eine Unterrahmenanzeigeinformation der mindestens einen MTC-Zelle eins zu eins entspricht; oder
wobei die Messanzeigeinformationen eine Unterrahmenanzeigeinformation umfassen, mindestens zwei MTC-Zellen auf dem Zielträger ausgelegt sind und die mindestens zwei MTC-Zellen einen selben Unterrahmen verwenden.

9. Verfahren nach einem der Ansprüche 1 bis 8, wobei das Senden der Messanzeigeinformationen an die Teilnehmereinrichtung Folgendes umfasst:
Senden der Messanzeigeinformationen an die Teilnehmereinrichtung unter Verwendung einer Nachricht zur Neuauslegung einer Funkressourcensteuerverbindung.

10. Verfahren nach einem der Ansprüche 1 bis 9, wobei vor dem Senden durch eine Basisstationsvorrichtung von mindestens einer Messanzeigeinformation an eine Teilnehmereinrichtung das Verfahren ferner Folgendes umfasst:
Bestimmen durch die Basisstationsvorrichtung, dass die Teilnehmereinrichtung in der Lage ist, eine Maschinentypkommunikation durchzuführen.

11. Kommunikationsverfahren, wobei das Verfahren Folgendes umfasst:
Erfassen durch eine Teilnehmereinrichtung von mindestens einer Messanzeigeinformation, die von einer Basisstationsvorrichtung gesendet wurde, wobei die Messanzeigeinformationen erste Trägerinformationen umfassen, die zum Anzeigen eines Zielträgers verwendet werden, mindestens eine Maschinentypkommunikations(MTC)-Zelle auf dem Zielträger ausgelegt ist und die Messanzeigeinformationen ferner mindestens eine der folgenden Informationen umfassen: erste Messbandbreitenanzeigeinformationen, mindestens eine Referenzsymbolanzeigeinformation und mindestens eine Unterrahmenanzeigeinformation; und
Durchführen durch die Teilnehmereinrichtung einer Messung gemäß den Messanzeigeinformationen und Senden von ersten Messberichtsinformationen an die Basisstationsvorrichtung gemäß einem Ergebnis der Messung, wobei die ersten Messbandbreitenanzeigeinformationen zum Anzeigen einer ersten Messbandbreite verwendet werden, die erste Messbandbreite für eine Messung der mindestens einen MTC-Zelle verwendet wird, die erste Messbandbreite sich von einer zweiten Messbandbreite unterscheidet und die zweite Messbandbreite für eine Messung einer ersten Nicht-MTC-Zelle, die auf dem Zielträger ausgelegt ist, verwendet wird;
die Referenzsymbolanzeigeinformationen zum Anzeigen einer Auslegung eines Referenzsymbols einer entsprechenden MTC-Zelle verwendet werden und das Referenzsymbol der MTC-Zelle für eine Messung der MTC-Zelle verwendet wird und
die Unterrahmenanzeigeinformationen zum Anzeigen eines Unterrahmens, der von einer entsprechenden MTC-Zelle verwendet wird, verwendet werden;
wobei eine Kommunikationsfähigkeit der Einrichtung vorab der Basisstationsvorrichtung mitgeteilt wird, wenn die Einrichtung zum Bestimmen der Kommunikationsfähigkeit der Einrichtung durch die Basisstation auf ein Netzwerk zugreift oder dieses übergibt.

12. Verfahren nach Anspruch 11, wobei die Messanzeigeinformationen die Referenzsymbolanzeigeinformationen umfassen, eine Zeitfrequenzressource der MTC-Zelle auf Basis einer Zeitfrequenzressource einer zweiten Nicht-MTC-Zelle ausgelegt ist und das Referenzsymbol der MTC-Zelle auf Basis eines Referenzsymbols der zweiten Nicht-MTC-Zelle ausgelegt ist, wobei das Referenzsymbol der zweiten Nicht-MTC-Zelle zum Messen der zweiten Nicht-MTC-Zelle verwendet wird; und
die Referenzsymbolanzeigeinformationen speziell zum Anzeigen einer Position, in der sich die Zeitfrequenzressource der MTC-Zelle in der Zeitfrequenzressource der zweiten Nicht-MTC-Zelle befindet, verwendet werden, oder
die Referenzsymbolanzeigeinformationen speziell zum Anzeigen einer Position, in der sich das Referenzsymbol der MTC-Zelle im Referenzsymbol der zweiten Nicht-MTC-Zelle befindet, verwendet werden.

13. Verfahren nach Anspruch 12, wobei die Referenzsymbolanzeigeinformationen erste Bandbreiteninformationen, eine Zellkennung der zweiten Nicht-MTC-Zelle und mindestens eines von zweiten Trägerinformationen und Versatzinformationen umfassen, wobei die ersten Bandbreiteninformationen zum Anzeigen einer Bandbreite der zweiten Nicht-MTC-Zelle verwendet werden, die zweiten Trägerinformationen zum Anzeigen eines Trägers der zweiten Nicht-MTC-Zelle verwendet werden und die Versatzinformationen zum Anzeigen eines Versatzes des Zielträgers relativ zum Träger der zweiten Nicht-MTC-Zelle verwendet werden und das Durchführen durch die Teilnehmereinrichtung einer Messung gemäß den Messanzeigeinformationen speziell Folgendes umfasst:
Bestimmen durch die Teilnehmereinrichtung einer Bandbreite der MTC-Zelle gemäß den Systeminformationen;
Bestimmen durch die Teilnehmereinrichtung des Referenzsymbols der MTC-Zelle gemäß den Referenzsymbolanzeigeinformationen und der Bandbreite der MTC-Zelle und
Messen durch die Teilnehmereinrichtung der MTC-Zelle gemäß dem Referenzsymbol der MTC-Zelle oder
wobei die Referenzsymbolanzeigeinformationen zweite Bandbreiteninformationen, erste Bandbreiteninformationen, eine Zellkennung der zweiten Nicht-MTC-Zelle und mindestens eines von zweiten Trägerinformationen und Versatzinformationen umfassen, wobei die zweiten Bandbreiteninformationen zum Anzeigen einer Bandbreite der MTC-Zelle verwendet werden, die ersten Bandbreiteninformationen zum Anzeigen einer Bandbreite der zweiten Nicht-MTC-Zelle verwendet werden, die zweiten Trägerinformationen zum Anzeigen eines Trägers der zweiten Nicht-MTC-Zelle verwendet werden und die Versatzinformationen zum Anzeigen eines Versatzes des Zielträgers relativ zum Träger der zweiten Nicht-MTC-Zelle verwendet werden und
das Durchführen durch die Teilnehmereinrichtung einer Messung gemäß den Messanzeigeinformationen speziell Folgendes umfasst:
Bestimmen durch die Teilnehmereinrichtung des Referenzsymbols der MTC-Zelle gemäß den Referenzsymbolanzeigeinformationen und
Messen durch die Teilnehmereinrichtung der MTC-Zelle gemäß dem Referenzsymbol der MTC-Zelle.

14. Kommunikationseinrichtung, wobei die Einrichtung Folgendes umfasst:
eine Sendeeinheit (310), die dazu ausgelegt ist, den Sendeschritt nach einem der Ansprüche 1 bis 10 auszuführen;
eine Empfangseinheit (320), die dazu ausgelegt ist, den Empfangsschritt nach einem der Ansprüche 1 bis 10 auszuführen; und
eine Verarbeitungseinheit (330), die dazu ausgelegt ist, den Kommunikations- oder Bestimmungsschritt nach einem der Ansprüche 1 bis 10 auszuführen.

15. Kommunikationseinrichtung, wobei die Einrichtung Folgendes umfasst:
eine Erfassungseinheit (410), die dazu ausgelegt ist, den Erfassungsschritt nach einem der Ansprüche 11 bis 13 auszuführen;
eine Verarbeitungseinheit (420), die dazu ausgelegt ist, den Messschritt nach einem der Ansprüche 11 bis 13 auszuführen; und
eine Sendeeinheit (430), die dazu ausgelegt ist, den Sendeschritt nach einem der Ansprüche 11 bis 13 auszuführen.

## Revendications

1. Procédé de communication, le procédé comprenant :
l'envoi, par un dispositif de station de base, d'au moins un élément d'informations d'indication de mesure à un élément d'équipement utilisateur, dans lequel les informations d'indication de mesure comprennent des premières informations de porteuse servant à indiquer une porteuse cible, au moins une cellule de communication de type de machine MTC est configurée sur la porteuse cible, et les informations d'indication de mesure comprennent en outre au moins l'une des informations suivantes : des premières informations d'indication de largeur de bande de mesure, au moins un élément d'informations d'indication de symbole de référence, et au moins un élément d'informations d'indication de sous-trame ; et
la réception, par le dispositif de station de base, de premières informations de rapport de mesure envoyées par l'équipement utilisateur après que l'équipement utilisateur exécute une mesure conformément aux informations d'indication de mesure, et la communication avec l'équipement utilisateur conformément aux premières informations de rapport de mesure, dans lequel
les premières informations d'indication de largeur de bande de mesure servent à indiquer une première largeur de bande de mesure, la première largeur de bande de mesure servant à la mesure de l'au moins une cellule MTC, la première largeur de bande de mesure est différente d'une seconde largeur de bande de mesure, et la seconde largeur de bande de mesure sert à la mesure d'une première cellule non MTC configurée sur la porteuse cible ;
les informations d'indication de symbole de référence servent à indiquer une configuration d'un symbole de référence d'une cellule MTC correspondante, et le symbole de référence de la cellule MTC sert à la mesure de la cellule MTC ; et
les informations d'indication de sous-trame servent à indiquer une sous-trame utilisée par une cellule MTC correspondante ;
le procédé comprenant en outre avant l'envoi, par le dispositif de station de base, d'au moins un élément d'informations d'indication de mesure à l'équipement utilisateur :
la détermination, par le dispositif de station de base, d'une capabilité de communication de l'équipement utilisateur ;
la détermination, par le dispositif de station de base conformément à la capabilité de communication de l'équipement utilisateur, d'une cellule voisine que l'équipement utilisateur est capable de mesurer ; et
la détermination, par le dispositif de station de base, de l'au moins un élément d'informations d'indication de mesure conformément à une porteuse de la cellule voisine.

2. Procédé selon la revendication 1, dans lequel les informations d'indication de mesure comprennent les informations d'indication de symbole de référence, une ressource temps-fréquence de la cellule MTC est configurée en fonction d'une ressource temps-fréquence d'une seconde cellule non-MTC, et le symbole de référence de la cellule MTC est configurée en fonction d'un symbole de référence de la seconde cellule non-MTC, dans lequel le symbole de référence de la seconde cellule non-MTC sert à la mesure de la seconde cellule non-MTC ; et
les informations d'indication de symbole de référence servent spécifiquement à indiquer une position à laquelle la ressource temps-fréquence de la cellule MTC est située dans la ressource temps-fréquence de la seconde cellule non-MTC, ou
les informations d'indication de symbole de référence servent spécifiquement à indiquer une position à laquelle le symbole de référence de la cellule MTC est situé dans le symbole de référence de la seconde cellule non-MTC.

3. Procédé selon la revendication 2, dans lequel les informations d'indication de symbole de référence comprennent des premières informations de largeur de bande, un identifiant de cellule de la seconde cellule non-MTC, et au moins l'une de secondes informations de porteuse et d'informations de décalage, dans lequel les premières informations de largeur de bande servent à indiquer une largeur de bande de la seconde cellule non-MTC, les secondes informations de porteuse servent à indiquer une porteuse de la seconde cellule non-MTC, et les informations de décalage servent à indiquer un décalage de la porteuse cible par rapport à la porteuse de la seconde cellule non-MTC.

4. Procédé selon la revendication 3, dans lequel les informations d'indication de symbole de référence comprennent en outre des secondes informations de largeur de bande, et les secondes informations de largeur de bande servent à indiquer une largeur de bande de la cellule MTC.

5. Procédé selon la revendication 1, dans lequel les informations d'indication de mesure comprennent les informations d'indication de symbole de référence, et
les informations d'indication de symbole de référence comprennent des informations de séquence de base et des informations de port, dans lequel les informations de séquence de base servent à indiquer une séquence de base pour générer le symbole de référence de la cellule MTC, et les informations de port servent à indiquer un port du symbole de référence de la cellule MTC.

6. Procédé selon la revendication 5, dans lequel les informations d'indication de symbole de référence comprennent en outre des secondes informations de largeur de bande, et les secondes informations de largeur de bande servent à indiquer une largeur de bande de la cellule MTC.

7. Procédé selon la revendication 5 ou 6, dans lequel les informations d'indication de symbole de référence comprennent en outre un identifiant de cellule de la cellule MTC.

8. Procédé selon l'une quelconque des revendications 1 à 7, dans lequel les informations d'indication de mesure comprennent l'au moins un élément d'informations d'indication de sous-trame, et l'au moins un élément d'informations d'indication de sous-trame correspond de manière biunivoque à l'au moins une cellule MTC ; ou dans lequel les informations d'indication de mesure comprennent un élément d'informations d'indication de sous-trame, au moins deux cellules MTC sont configurées sur la porteuse cible, et les au moins deux cellules MTC utilisent une même sous-trame.

9. Procédé selon l'une quelconque des revendications 1 à 8, dans lequel l'envoi des informations d'indication de mesure à l'équipement utilisateur comprend :
l'envoi des informations d'indication de mesure à l'équipement utilisateur à l'aide d'un message de reconfiguration de connexion de commande de ressources radio.

10. Procédé selon l'une quelconque des revendications 1 à 9, le procédé comprenant en outre, avant l'envoi, par un dispositif de station de base, d'au moins un élément d'informations d'indication de mesure à un élément d'équipement utilisateur :
la détermination, par le dispositif de station de base, que l'équipement utilisateur est capable d'exécuter une communication du type machine.

11. Procédé de communication, le procédé comprenant :
l'acquisition, par un élément d'équipement utilisateur, d'au moins un élément d'informations d'indication de mesure envoyé par un dispositif de station de base, dans lequel les informations d'indication de mesure comprennent des premières informations de porteuse servant à indiquer une porteuse cible, au moins une cellule de communication de type de machine MTC est configurée sur la porteuse cible, et les informations d'indication de mesure comprennent en outre au moins l'une des informations suivantes : des premières informations d'indication de largeur de bande de mesure, au moins un élément d'informations d'indication de symbole de référence, et au moins un élément d'informations d'indication de sous-trame ; et
l'exécution, par l'équipement utilisateur, d'une mesure conformément aux informations d'indication de mesure, et l'envoi de premières informations de rapport de mesure au dispositif de station de base conformément à un résultat de la mesure, dans lequel
les premières informations d'indication de largeur de bande de mesure servent à indiquer une première largeur de bande de mesure, la première largeur de bande de mesure servent à la mesure de l'au moins une cellule MTC, la première largeur de bande de mesure est différente d'une seconde largeur de bande de mesure, et la seconde largeur de bande de mesure sert à la mesure d'une première cellule non MTC configurée sur la porteuse cible ;
les informations d'indication de symbole de référence servent à indiquer une configuration d'u symbole de référence d'une cellule MTC correspondante, et le symbole de référence de la cellule MTC sert à la mesure de la cellule MTC ; et
les informations d'indication de sous-trame servent à indiquer une sous-trame utilisée par une cellule MTC correspondante ;
dans lequel une capabilité de communication de l'élément d'équipement est notifiée à la station de base avant que l'élément d'équipement accède ou passe à un réseau pour déterminer la capabilité de communication de l'élément d'équipement par la station de base.

12. Procédé selon la revendication 11, dans lequel les informations d'indication de mesure comprennent les informations d'indication de symbole de référence, une ressource temps-fréquence de la cellule MTC est configurée en fonction d'une ressource temps-fréquence d'une seconde cellule non-MTC, et le symbole de référence de la cellule MTC est configurée en fonction d'un symbole de référence de la seconde cellule non-MTC, dans lequel le symbole de référence de la seconde cellule non-MTC sert à la mesure de la seconde cellule non-MTC ; et
les informations d'indication de symbole de référence servent spécifiquement à indiquer une position à laquelle la ressource temps-fréquence de la cellule MTC est située dans la ressource temps-fréquence de la seconde cellule non-MTC, ou
les informations d'indication de symbole de référence servent spécifiquement à indiquer une position à laquelle le symbole de référence de la cellule MTC est situé dans le symbole de référence de la seconde cellule non-MTC.

13. Procédé selon la revendication 12, dans lequel les informations d'indication de symbole de référence comprennent des premières informations de largeur de bande, un identifiant de cellule de la seconde cellule non-MTC, et au moins l'une de secondes informations de porteuse et d'informations de décalage, dans lequel les premières informations de largeur de bande servent à indiquer une largeur de bande de la seconde cellule non-MTC, les secondes informations de porteuse servent à indiquer une porteuse de la seconde cellule non-MTC, et les informations de décalage servent à indiquer un décalage de la porteuse cible par rapport à la porteuse de la seconde cellule non-MTC, et
l'exécution, par l'équipement utilisateur, d'une mesure conformément aux informations d'indication de mesure comprend spécifiquement :
la détermination, par l'équipement utilisateur, d'une largeur de bande de la cellule MTC conformément aux informations de système ;
la détermination, par l'équipement utilisateur, du symbole de référence de la cellule MTC conformément aux informations d'indication de symbole de référence et de la largeur de bande de la cellule MTC ; et
la mesure, par l'équipement utilisateur, de la cellule MTC conformément au symbole de référence de la cellule MTC ; ou
dans lequel les informations d'indication de symbole de référence comprennent des secondes informations de largeur de bande, des premières informations de largeur de bande, un identifiant de cellule de la seconde cellule non-MTC, et au moins l'une de secondes informations de porteuse et d'informations de décalage, dans lequel les secondes informations de largeur de bande servent à indiquer une largeur de bande de la cellule MTC, les premières informations de largeur de bande servent à indiquer une largeur de bande de la seconde cellule non-MTC, les secondes informations de porteuse servent à indiquer une porteuse de la seconde cellule non-MTC, et les informations de décalage servent à indiquer un décalage de la porteuse cible par rapport à la porteuse de la seconde cellule non-MTC, et
l'exécution par l'équipement utilisateur, d'une mesure conformément aux informations d'indication de mesure comprend :
la détermination, par l'équipement utilisateur, du symbole de référence de la cellule MTC conformément aux informations d'indication de symbole de référence ; et la mesure, par l'équipement utilisateur, de la cellule MTC conformément au symbole de référence de la cellule MTC.

14. Appareil de communications, l'appareil comprenant :
une unité d'envoi (310), configurée pour exécuter l'étape d'envoi selon l'une quelconque des revendications 1 à 10 ;
une unité de réception (320), configurée pour exécuter l'étape de réception selon l'une quelconque des revendications 1 à 10 ; et
une unité de traitement (330), configurée pour exécuter l'étape de communication ou de détermination selon l'une quelconque des revendications 1 à 10.

15. Appareil de communications, l'appareil comprenant :
une unité d'acquisition (410), configurée pour exécuter l'étape d'acquisition selon l'une quelconque des revendications 11 à 13 ;
une unité de traitement (420), configurée pour exécuter l'étape de mesure selon l'une quelconque des revendications 11 à 13 ; et
une unité d'envoi (430), configurée pour exécuter l'étape d'envoi selon l'une quelconque des revendications 11 à 13.
